Europäisches Patentamt

European Patent Office

Office européen des brevets

(19)

(11) **EP 1 509 012 A2**

(12) **EUROPEAN PATENT APPLICATION**

(43) Date of publication:
**23.02.2005 Bulletin 2005/08**

(51) Int Cl.[7]: **H04L 12/56**

(21) Application number: **04019726.1**

(22) Date of filing: **19.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **20.08.2003 KR 2003057733**
**01.10.2003 KR 2003068505**
**07.10.2003 KR 2003069740**

(71) Applicant: **Samsung Electronics Co., Ltd.**
**Suwon-si, Gyeonggi-do (KR)**

(72) Inventors:
• **Lee, Ju-Ho, Samsung Electronics Co., Ltd.**
**Suwon-si, Gyeonggi-do (KR)**

• **Kwak, Yong-Jun, Samsung Electronics Co., Ltd.**
**Suwon-si, Gyeonggi-do (KR)**
• **Choi, Sung-Ho, Samsung Electronics Co., Ltd.**
**Suwon-si, Gyeonggi-do (KR)**
• **Heo, Youn-Hyoung,**
**Samsung Electronics Co., Ltd.**
**Suwon-si, Gyeonggi-do (KR)**
• **Kim, Young-Bum, Samsung Electronics Co., Ltd.**
**Suwon-si, Gyeonggi-do (KR)**
• **Kwon, Hwan-Joo, Samsung Electronics Co., Ltd.**
**Suwon-si, Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Method and apparatus for scheduling uplink packet transmission in a mobile communication system**

(57) A method of transmitting and receiving buffer status information and CSI for scheduling of an uplink packet data service in a mobile communication system supporting the uplink packet data service. The buffer status information represents the status of a UE buffer having packet data and the CSI represents the uplink transmit power of a UE. The UE initially transmits the buffer status information and the CSI, if the amount of packet data in the buffer is at least equal to a predetermined threshold. Upon generation of new packet data in the buffer, or according to a predetermined buffer status interval, the UE transmits the buffer status information.

FIG.2

**EP 1 509 012 A2**

**Description**

**BACKGROUND OF THE INVENTION**

1. Field of the Invention

The present invention relates generally to a mobile communication system, and in particular, to a method and apparatus for efficiently transmitting and receiving scheduling information and scheduling assignment information for uplink packet transmission.

2. Description of the Related Art

An asynchronous WCDMA (Wideband Code Division Multiple Access) communication system uses an EUDCH (Enhanced Uplink Dedicated CHannel) to provide a high-rate packet data service is an uplink direction. The EUDCH was designed to improve the performance of uplink packet transmission. Besides the existing HSDPA (High Speed Downlink Packet Access) schemes, AMC (Adaptive Modulation and Coding), and HARQ (Hybrid Automatic Retransmission request), the EUDCH technology utilizes new techniques using a short TTI (Transmission Time Interval). Also, Node B controlled scheduling is applied to uplink channels. The Node B controlled uplink scheduling is very different from downlink scheduling.

Orthogonality is not maintained between uplink signals from a plurality of UEs (User Equipments). Therefore, the uplink signals interfere with each other. Accordingly, as a Node B receives more uplink signals, interference with an uplink signal from a particular UE increases, thereby degrading the reception performance of the Node B. Although the problem can be overcome by increasing the uplink transmit power, the uplink signal with the increased transmit power in turn interferes with other uplink signals. Therefore, the Node B limits uplink signals that can be received with an acceptable reception performance as shown in Equation (1),

$$ROT = I\_0 / N\_0 \tag{1}$$

where I_0 is the total receiving wideband power spectral density of the Node B and N_0 is the thermal noise power spectral density of the Node B. Accordingly, ROT represents uplink radio resources available to Node B to receive the EUDCH packet data service.

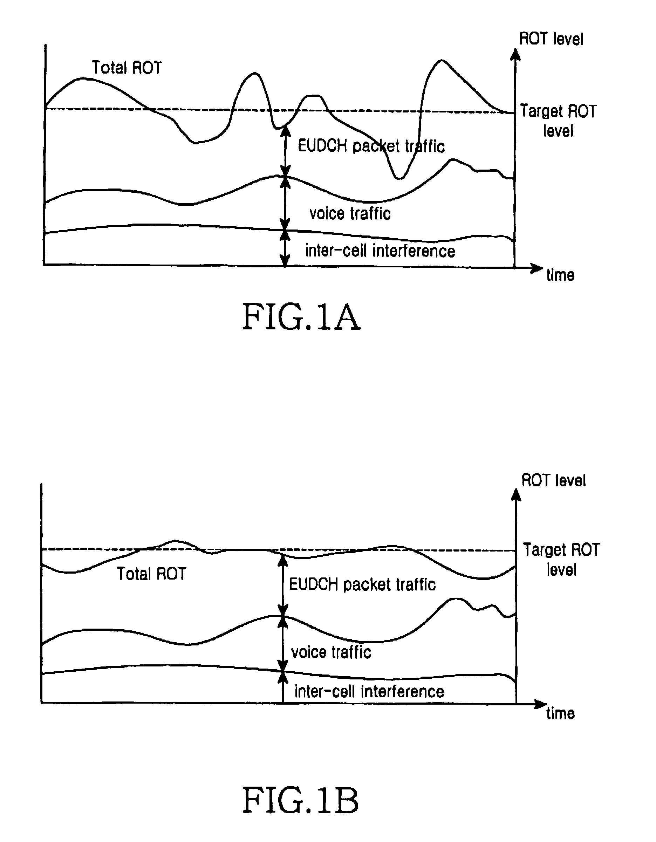

FIGS. 1A and 1B are graphs illustrating changes in uplink radio resources available to the Node B. As illustrated in FIGS. 1A and 1B, the uplink radio resources are the sum of ICI (Inter-Cell Interference), voice traffic, and EUDCH packet traffic.

FIG. 1A illustrates changes in a total ROT when Node B controlled scheduling is not used. With no scheduling of EUDCH packet traffic, a plurality of UEs may simultaneously transmit data at high rates. In this case, the total ROT exceeds a target ROT and the reception performance of the UL signals is degraded.

FIG. 1B illustrates changes in the total ROT when the Node B controlled scheduling is used. The Node B controlled scheduling prevents the UEs from simultaneously transmitting data at high rates. When a high rate is allowed for a particular UE, low rates are allowed for other UEs, such that the total ROT does not exceed the target ROT. Accordingly, the Node B controlled scheduling ensures a constant reception performance.

Using the EUDCH, the Node B notifies UEs if EUDCH data transmission is available, or adjusts EUDCH data rates for them, utilizing requested data rates or CSI (Channel State Information) representing uplink quality from the UEs. In this Node control B scheduling, the Node B assigns data rates to the UEs such that the total ROT does not exceed the target ROT, thereby improving system performance. The Node B can assign a low data rate to a remote (or far away) UE, and a high data rate to a nearby UE.

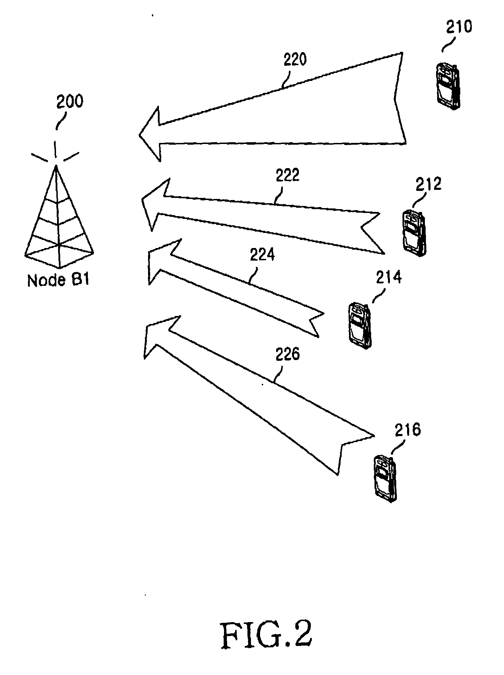

FIG. 2 illustrates a basic concept of the Node B controlled scheduling of the EUDCH. Referring to FIG 2, reference numeral 200 denotes a Node B supporting the EUDCH and reference numerals 210 to 216 denote UEs using the EUDCH. When the data rate of a UE increases, the Node B receives data from the UE at an increased reception power. Therefore, the ROT of the UE contributes more to the total ROT. If the data rate of another UE decreases, the Node B receives data from the UE at a decreased reception power. Therefore, the ROT of the UE contributes less to the total ROT. The Node B schedules the EUDCH packet data considering the relationship between data rates and radio resources and UEs-requested data rates.

In FIG. 2, the UEs 210 to 216 transmit packet data at different uplink transmit power levels according to the distances between them and the Node B 200. The farthest UE 210 transmits packet data at the highest uplink transmit power level 220, while the nearest UE 214 transmits packet data at the lowest uplink transmit power level 224. The Node B schedules uplink data transmission in the manner that makes the transmit power of the uplink channel is inversely proportional to its data rate in order to improve system performance, while maintaining the total ROT and reducing ICI. Accordingly, the Node B assigns a relatively low data rate to the UE 210 having the highest transmit power and a relative high data rate to the UE 214 having the lowest transmit power.

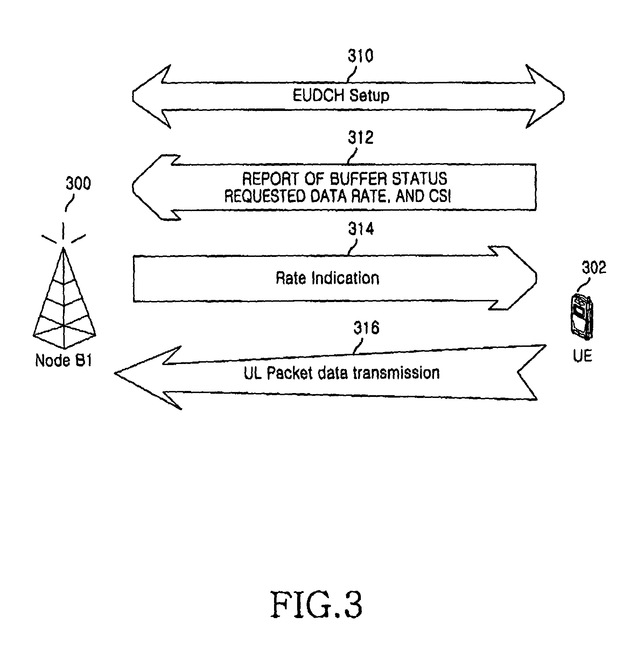

FIG. 3 illustrates an operation for being assigned a data rate for EUDCH packet transmission and transmitting packet data at the assigned data rate in a UE. Referring to FIG 3, an EUDCH is established between a Node B 300 and a UE 302 in step 310. Step 310 involves transmission and reception of messages on dedicated transport channels. In step 312, the UE 302 notifies the Node B 300 of a desired data rate, buffer status information, and uplink CSI. The uplink CSI includes the uplink transmit power or/and transmit power margin of the UE 302.

The Node B 300 estimates the uplink channel state by comparing the uplink transmit power with uplink received power. If the difference between the uplink transmit power and the uplink received power is small, the uplink channel state is good. If the difference is large, the uplink channel state is bad. When the UE transmits only the transmit power margin, the Node B 300 estimates the uplink transmit power by subtracting the transmit power margin from a known maximum available transmit power of the UE 302. The Node B 300 determines a maximum available data rate for the UE based on the estimated uplink channel state and the requested data rate.

In step 314, the Node B 300 notifies the UE 302 of the maximum data rate by scheduling assignment information. The UE 302 selects a data rate that is equal to or less than the maximum data rate and transmits packet data at the selected data rate to the Node B 300 in step 316.

To transmit all packet data of an EUDCH data buffer to the Node B 300, the UE 302 must receive the scheduling assignment information from the Node B 300 at every predetermined interval. However, when the UE 302 transmits buffer status information and CSI at every scheduling interval, the resulting signaling overhead decreases the efficiency of uplink packet transmission. Therefore, there is a need for an efficient scheduling scheme to decrease the uplink signaling overhead.

## SUMMARY OF THE INVENTION

The present invention has been designed to substantially solve at least the above problems and/or disadvantages and to provide at least the advantages below. Accordingly, an object of the present invention is to provide a method and apparatus for reducing uplink signaling overhead during uplink packet transmission.

Another object of the present invention is to provide a method and apparatus for controlling the transmission intervals of buffer status information and CSI on the uplink to reduce signaling overhead.

A further object of the present invention is to provide a method and apparatus for efficiently transmitting uplink packets by controlling the transmission intervals of buffer status information and CSI.

Still another object of the present invention is to provide a method and apparatus for efficiently utilizing radio resources by controlling the transmission intervals of buffer status information and CSI.

The above and other objects are achieved by providing a method and apparatus for transmitting and receiving buffer status information and CSI for scheduling an uplink packet data service in a mobile communication system .

According to one aspect of the present invention, in a method in a UE of transmitting buffer status information and CSI for scheduling of an uplink packet data service in a mobile communication system, the buffer status information represents the status of a buffer for storing packet data to be transmitted and the CSI represents the uplink transmit power of the UE. The UE monitors the amount of packet data stored in the buffer. If the data amount is at least equal to a predetermined threshold, the UE initially transmits the buffer status information and the CSI. After the initial transmission of the buffer status information and the CSI, the UE transmits the buffer status information upon generation of new packet data in the buffer.

According to another aspect of the present invention, the UE monitors the amount of packet data stored in the buffer. If the data amount is at least equal to a predetermined threshold, the UE initially transmits the buffer status information and the CSI. Upon generation of new packet data in the buffer after the initial transmission of the buffer status information and the CSI, the UE transmits the buffer status information according to a predetermined buffer status transmission interval.

According to a further aspect of the present invention, the UE waits until a first buffer status transmission time point among buffer status transmission time points determined according to a predetermined buffer status interval. The UE monitors the amount of packet data stored in the buffer at the buffer status transmission time point. If the data amount is at least equal to a predetermined threshold, the UE initially transmits the buffer status information and the CSI. After the initial transmission of the buffer status information and the CSI, the UE determines if new packet data is generated in the buffer at a second buffer status transmission time point. Upon generation of the new packet data in the buffer at the second buffer status transmission time point, the UE transmits the buffer status information.

According to still another aspect of the present invention, the UE monitors the amount of packet data stored in the buffer. If the data amount is at least equal to a predetermined threshold, the UE initially transmits the buffer status information and the CSI, and activates a timer set to a predetermined buffer status transmission interval. Upon generation of new packet data in the buffer and reactivating the timer, the UE transmits the buffer status information. Upon expiration of the timer, the UE transmits the buffer status information and reactivates the timer.

**BRIEF DESCRIPTION OF THE DRAWINGS**

The above and other objects, features, and advantages of the present invention will become more apparent from the following detailed description when taken in conjunction with the accompanying drawings in which:

FIG 1A illustrates changes in uplink radio resources of a Node B in when Node B controlled scheduling is not used;
FIG. 1B illustrates changes in uplink radio resources of the Node B when the Node B controlled scheduling is used;
FIG 2 illustrates the Node B and UEs in uplink packet transmission;
FIG 3 illustrates information exchanged for uplink packet transmission between the Node B and a UE;
FIG 4 is a block diagram illustrating a UE transmitter for transmitting uplink packets;
FIGs. 5A and 5B respectively illustrate a scheduling control channel (EU-SCHCCH) for receiving uplink packets and an EU-SCHCCH transmitter in the Node B;
FIG 6 illustrates continuous transmission of buffer status information and CSI from which the Node B controlled scheduling is performed;
FIG 7 illustrates the transmission format of buffer status information and CSI from the UE according to a preferred embodiment of the present invention;
FIG 8 illustrates transmission of buffer status information and CSI according to an embodiment of the present invention;
FIG. 9 is a block diagram of an EUDCH transmission controller for transmitting the buffer status information and CSI in the UE according to an embodiment of the present invention;
FIG 10 is a flowchart illustrating an operation in the UE for transmitting the buffer status information and CSI according to an embodiment of the present invention;
FIG 11 is a block diagram of a receiver in the Node B for receiving the buffer status information and CSI according to an embodiment of the present invention;
FIG 12 is a flowchart illustrating an operation in the Node B for receiving the buffer status information and CSI according to an embodiment of the present invention;
FIG 13 illustrates transmission of buffer status information and CSI according to an embodiment of the present invention;
FIG. 14 is a block diagram of an EUDCH transmission controller for transmitting the buffer status information and CSI in the UE according to an embodiment of the present invention;
FIG 15 is a flowchart illustrating an operation in the UE for transmitting the buffer status information and CSI according to an embodiment of the present invention;
FIG. 16 is a block diagram of a receiver in the Node B for receiving the buffer status information and CSI according to an embodiment of the present invention;
FIG 17 is a flowchart illustrating an operation in the Node B for receiving the buffer status information and CSI according to an embodiment of the present invention;
FIG 18 illustrates transmission of buffer status information and CSI according to an embodiment of the present invention;
FIG 19 is a block diagram of an EUDCH transmission controller for transmitting the buffer status information and CSI in the UE according to an embodiment of the present invention;
FIG 20 is a flowchart illustrating an operation in the UE for transmitting the buffer status information and CSI according to an embodiment of the present invention;
FIG. 21 is a block diagram illustrating a receiver in the Node B for receiving the buffer status information and CSI according to an embodiment of the present invention;
FIG 22 is a flowchart illustrating an operation in the Node B for receiving the buffer status information and CSI according to an embodiment of the present invention;
FIG 23 illustrates transmission of buffer status information and CSI according to a fourth embodiment of the present invention;
FIG 24 is a flowchart illustrating an operation in the UE for transmitting the buffer status information and CSI according to an embodiment of the present invention;
FIG. 25 illustrates transmission of buffer status information using a timer according to an embodiment of the present invention;
FIG. 26 is a flowchart illustrating an operation in the UE for transmitting the buffer status information and CSI according to an embodiment of the present invention; and
FIG 27 illustrates a code block in which buffer status information and CSI are simultaneously transmitted according to an embodiment of the present invention.

**DETAILED DESCRIPTION OF THE PREFERRED EMBODIMENTS**

Preferred embodiments of the present invention will be described in detail herein below with reference to the accompanying drawings. In the following description, well-known functions or constructions are not described in detail since they would obscure the invention in unnecessary detail.

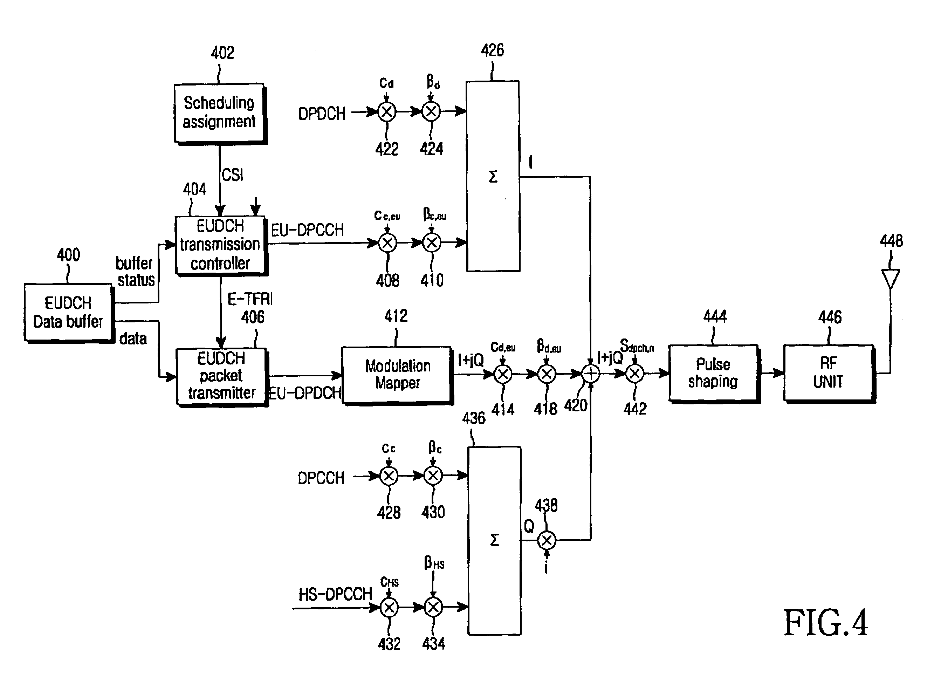

FIG 4 is a block diagram of a transmitter in a UE supporting the EUDCH service. Uplink physical channels available to the UE are a DPDCH (Dedicated Physical Data Channel), an EU-DPDCH, which is a DPDCH used for the EUDCH service, a DPCCH (Dedicated Physical Control Channel), an HS-DPCCH (High Speed DPCCH) for HSDPA service, and an EU-DPCCH, which is a DPCCH used for the EUDCH service.

The EU-DPCCH delivers the buffer status information and CSI of a UE. The CSI includes an uplink transmit power and an uplink transmit power margin required for a Node B to estimate the uplink channel state of the UE. Also, the EU-DPCCH delivers an E-TFRI (EUDCH-Transport Format and Resource Indicator) that represents the transport format of the EU-DPDCH including the used data size, data rate, and modulation scheme. The EU-DPDCH conveys packet data at a data rate that is determined according to scheduling assignment information received from the Node B. While the DPDCH supports BPSK (Binary Phase Shift Keying) only, the EU-DPDCH additionally supports higher-order modulations such as QPSK (Quadrature Phase Shift Keying) and 8PSK (8-ary PSK) to increase data rate while maintaining the number of simultaneous spreading codes.

Referring to FIG. 4, an EUDCH transmission controller 404 monitors an EUDCH data buffer 400 having data to be transmitted on the EUDCH and acquires buffer status information required for Node B control scheduling. Further, the EUDCH transmission controller 404 acquires CSI from an uplink transmission path (not shown). The EUDCH transmission controller 404 determines an E-TFRI representing the transport format of EUDCH packet data. The E-TFRI is determined according to a maximum data rate allowed by a scheduling assigner 402. The EUDCH transmission controller 404 generates EU-DPCCH data including the buffer status information, CSI, and E-TFRI, and outputs it to a spreader 408.

DPDCH data is spread at a chip rate with an OVSF (Orthogonal Variable Spreading Factor) code assigned to the DPDCH in a spreader 422, multiplied by a channel gain in a gain adjuster 424, and applied to the input of a summer 426. The EU-DPCCH data is spread at a chip rate with an OVSF code assigned to the EU-DPCCH in the spreader 408, multiplied by a channel gain in a gain adjuster 410, and applied to the input of the summer 426. The summer 426 sums the outputs of the gain adjusters 424 and 410 and transmits the sum to a summer 420 to assign the sum to an I channel.

An EUDCH packet transmitter 406 reads as much packet data as indicated by the E-TFRI from the EUDCH data buffer 400 and encodes the packet data according to the E-TFRI, thereby producing EU-DPDCH data. A modulation mapper 412 modulates the EU-DPDCH data in BPSK, QPSK, or 8PSK and outputs an EU-DPDCH modulation symbol sequence. BPSK modulation symbols have real number values, whereas QPSK and 8PSK modulation symbols have complex number values. It is to be appreciated that the following description is made in the context of using QPSK or 8PSK for the EU-DPDCH by way of example.

The modulation mapper 412 converts the EU-DPDCH data to a complex symbol sequence. A spreader 414 spreads the modulation symbol sequence at a chip rate with an OVSF code assigned to the EU-DPDCH. The spread EU-DPDCH signal is multiplied by a channel gain in a gain adjuster 418 and applied to the input of the summer 420.

DPCCH data, which is control information of the DPDCH, is spread at a chip rate with an OVSF code assigned to the DPCCH in a spreader 428, multiplied by a channel gain in a gain adjuster 430, and applied to the input of a summer 436. HS-DPCCH data, which is control information for an HSDPA service, is spread at a chip rate with an OVSF code assigned to the HS-DPCCH in a spreader 432, multiplied by a channel gain in a gain adjuster 434, and applied to the input of the summer 436. The summer 436 sums the outputs of the gain adjusters 430 and 434 and transmits the sum to a phase adjuster 438 to assign the sum to a Q channel. The phase adjuster 438 multiplies the output of the summer 436 by a phase variation j.

The summer 420 sums the outputs of the summer 426, the gain adjuster 418, and the phase adjuster 438, and outputs the resulting complex symbol sequence to a scrambler 442. The scrambler 442 scrambles the complex symbol sequence with a scrambling code. The scrambled complex symbol sequence is converted in the form of pulses in a pulse shaping filter 444 and transmitted to the Node B through an RF (Radio Frequency) processor 446 and an antenna 448.

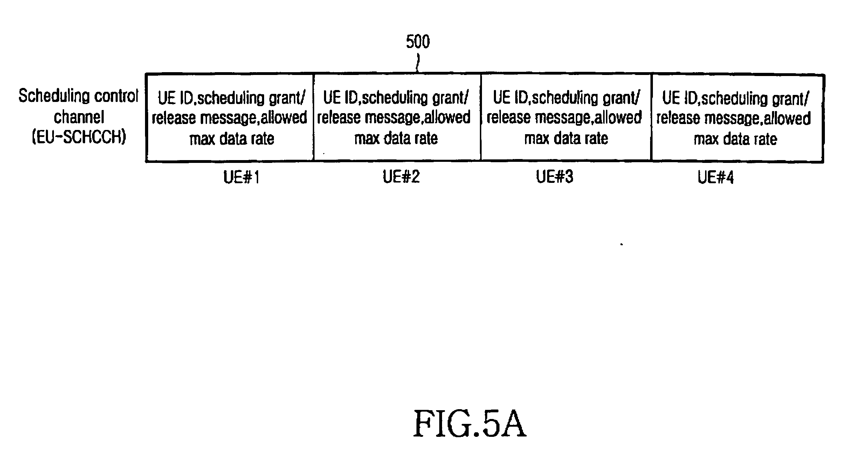

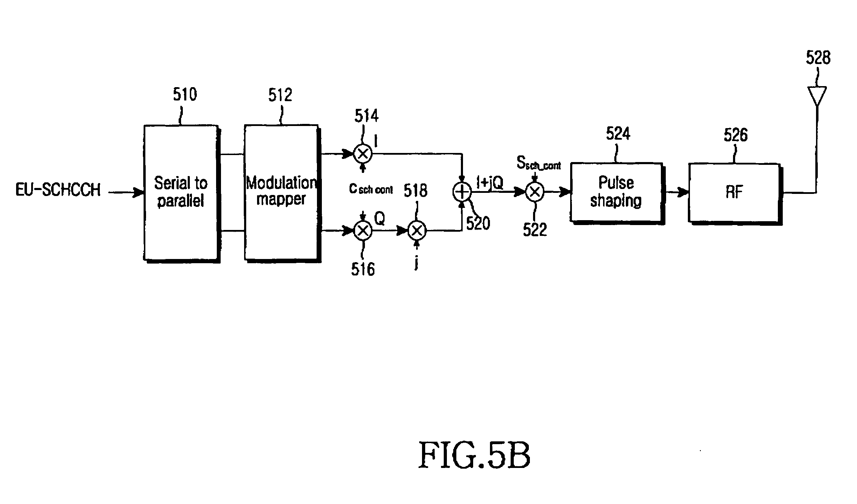

FIG 5A illustrates the format of the EU-SCHCCH for delivering EUDCH scheduling assignment information, and FIG 5B is a block diagram illustrating an EU-SCHCCH transmitter. The EU-SCHCCH delivers scheduling assignment information 500 including Scheduling Grant/Release Messages and allowed maximum data rates to a plurality of UEs, using one OVSF code. A Scheduling Grant/Release Message indicates if the EUDCH packet data is transmitted. The scheduling assignment information 500 includes the IDs of the UEs for which the Scheduling Grant/Release Messages and the allowed maximum data rates are destined.

A serial-to-parallel converter 510 converts the EU-SCHCCH data including the scheduling assignment information 500 to parallel symbol sequences. A modulation mapper 512 converts the parallel symbol sequences to I and Q streams. Spreaders 514 and 516 spread the I and Q streams with an OVSF code assigned to the EU-SHCCH at a chip rate. A phase adjuster 518 multiplies the Q stream received from the spreader 516 by the phase variation j. A summer 520 sums the outputs of the spreader 514 and the phase adjuster 518. A scrambler 522 scrambles the complex symbol sequence received from the summer 520 with a scrambling code. The scrambled complex symbol sequence is converted to pulse form in a pulse shaping filter 524 and transmitted to the UEs through an RF processor 526 and an antenna 528.

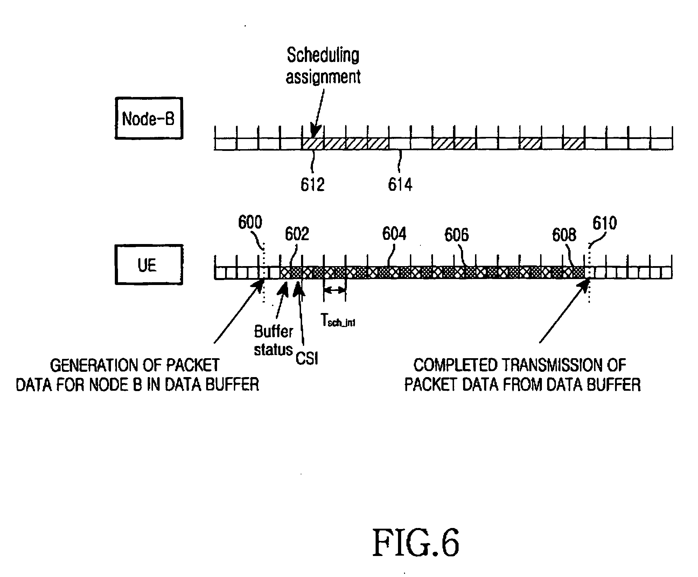

FIG 6 illustrates continuous transmission of buffer status information and CSI from a UE to a Node B and transmission of scheduling assignment information from the Node B to the UE in a typical EUDCH system. The UE transmits the buffer status information and CSI to the Node B at every predetermined interval (i.e., scheduling interval $T_{sch\_int}$) to receive the scheduling assignment information.

Referring to FIG 6, packet data destined for the Node B is stored (generated) in the EUDCH data buffer of the UE at a time 600. For a time period 602, the UE transmits to the Node B buffer status information indicating the data amount of the data buffer and CSI representing an uplink transmit power and a transmit power margin. The Node B determines a maximum data rate for the UE based on the buffer status information and CSI and transmits the maximum data rate to the UE by scheduling assignment information for a time period 610.

When all the packet data stored in the EUDCH data buffer cannot be transmitted to the Node B at one time, the UE continuously transmits the buffer status information and CSI at the scheduling interval $T_{sch\_int}$ from the time period 602 through a time 606 in order to request scheduling assignment to the Node B. The packet data is completely transmitted to the Node B by the time 606. Therefore, after the time 606, the UE discontinues transmission of the buffer status information and CSI. The Node B, although receiving the buffer status information and CSI from the UE, does not transmit the scheduling assignment information for a time period 612 if an ROT condition is not satisfied.

The transmission of the buffer status information and CSI at every scheduling interval significantly increases uplink overhead and reduces uplink traffic capacity. Therefore, in a preferred embodiment of the present invention, different transmission intervals are set for the buffer status information and the CSI.

For a non-buffer status information and CSI receiving period, the Node B estimates the buffer state information and CSI of the UE using an E-TFRI received from the UE and downlink TPC (Transmit Power Control) commands transmitted to the UE. A TPC command orders a UE transmit power increase/decrease. Therefore, the Node B estimates the current transmit power of the UE by adding transmit power calculated from the last reported CSI and as many power increment/decrement units as the number of TPS commands transmitted to the UE. Also, the Node B estimates the current buffer status of the UE by subtracting a data mount calculated by the E-TFRI from a data amount calculated using the last reported buffer status of the UE.

The E-TFRI is very significant for reception of EUDCH data. It is typically set to have a lower error rate than a TPC command. Therefore, the estimate of the buffer status is relatively reliable compared to the transmit power estimate. Accordingly, the transmission interval of the buffer status information is longer than the CSI transmission interval.

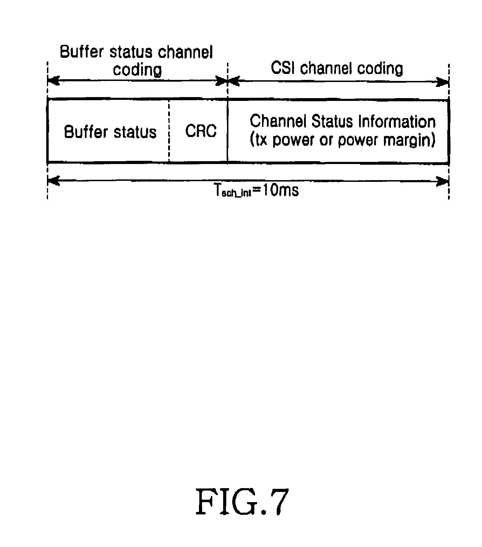

FIG 7 illustrates a code block including buffer status information and CSI transmitted from a UE according to a preferred embodiment of the present invention. Referring to FIG 7, the buffer status information and CSI are transmitted in one scheduling interval, $T_{sch\_int}$. The scheduling interval is 10ms in duration. While the CSI is transmitted periodically, the buffer status information is transmitted to the Node B only when new data is generated in the EUDCH data buffer. That is, transmission of the buffer state information is event-triggered. Accordingly, the UE channel-encodes the buffer status information and the CSI through different channel coding chains.

The buffer status information is attached with a CRC (Cyclic Redundancy Code) and then channel-encoded, whereas the CSI is directly channel-encoded without CRC attachment. The Node B determines that the buffer status information has been received by a CRC check. Because the CSI follows the buffer status information, a decision as to if the CSI has been received depends on the buffer status information being received. The CRC can be common to the buffer status information and the CSI.

In accordance with a preferred embodiment of the present invention, the UE operates as follows.

(1) If the amount of packet data stored in the EUDCH data buffer is at least equal to a predetermined scheduling threshold, the UE starts to transmit buffer status information and CSI to the Node B.

(2) The UE repeatedly transmits the buffer status information and the CSI at every predetermined transmission interval of which the RNC has notified the UE. As described above, the buffer status information is transmitted to the Node B only when new data is generated in the EUDCH data buffer.

(3) After transmission of the buffer status information and the CSI, the UE monitors the EU-DCHCCH to determine if scheduling assignment information has been received from the Node B.

(4) If the amount of packet data stored in the EUDCH data buffer is reduced below the threshold, the UE discontinues transmission of the buffer status information and the CSI. Also, when receiving from the Node B a Scheduling Release message indicating termination of the Node B controlled scheduling, the UE discontinues transmission of the buffer status information and the CSI.

The Node B operates as follows.

(1) The Node B continuously CRC-checks the EU-DPCCH to determine if the buffer status information has been received from the UE. Upon detection of the buffer status information in a scheduling interval by the CRC check, the Node B receives the CSI following the buffer status information in the same scheduling interval.

(2) Once the Node B has initially received the buffer status information and the CSI, it repeatedly receives the CSI in scheduling intervals determined according to a predetermined reception interval that the RNC provided to the Node B. Also, the Node B continuously CRC-checks the EU-DPCCH in every scheduling interval to determine if the buffer status information has been received.

(3) The Node B estimates the amount of packet data stored in the EUDCH data buffer of the UE and if the estimate is less than the predetermined threshold, discontinues reception of the buffer status and the CSI.

(4) Alternatively, in order to command the UE to discontinue transmission of the buffer status information and the CSI, the Node B transmits the Scheduling Release message to the UE.

Herein below, embodiments for a UE reporting the buffer status information and the CSI to the Node B will be described.

First Embodiment

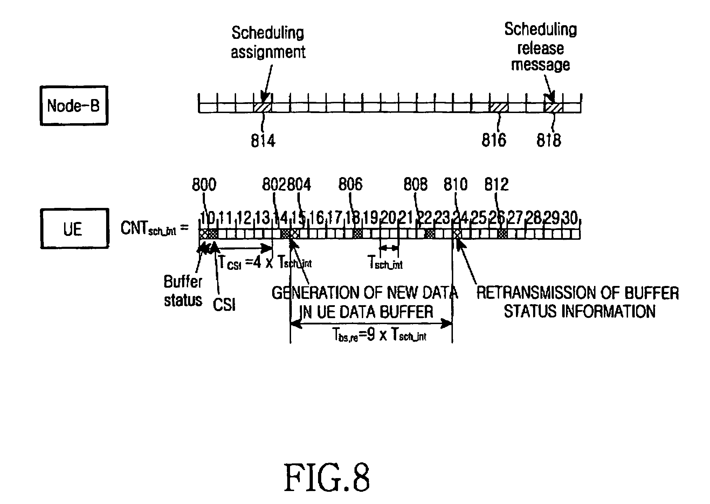

FIG. 8 illustrates EU-DPCCH signaling for scheduling assignment between the UE and the Node B according to an embodiment of the present invention. $T_{sch\_int}$ denotes a scheduling interval and each scheduling interval is divided into a buffer status information part and a CSI part. $CNT_{sch\_int}$ denotes the index of a scheduling interval. Scheduling intervals with $CNT_{sch\_int}$= 10 through $CNT_{sch\_int}$=30 are illustrated in FIG 8. $T_{CSI}$ and $T_{bs,re}$ denote a CSI transmission interval and a transmission interval of buffer state information, respectively.

In a scheduling interval 800 with $CNT_{sch\_int}$=10, the UE initially transmits buffer status information and CSI to the Node B, when determining that the amount of packet data stored in the EUDCH data buffer is at least equal to a scheduling threshold. The Node B generates scheduling assignment information based on the buffer status information and the CSI and transmits the scheduling assignment information in a time period 814. An ROT is considered in determining the scheduling assignment information.

In a scheduling interval 802 with $CNT_{sch\_int}$=14, the UE transmits only the CSI to the Node B. Because $T_{CSI}$ is four times the duration of $T_{sch\_int}$, the CSI is transmitted in scheduling intervals 800, 802, 806, 808, and 812 with $CNT_{sch\_int}$= 10, 14, 18, 22, and 26, respectively.

Upon generation of packet data for the Node B in the EUDCH data buffer before the start of a scheduling interval 804 with $CNT_{sch\_int}$=15, the UE transmits the buffer status information to the Node B in the scheduling interval 804 with $CNT_{sch\_int}$=15.

After the transmission of the buffer status information, the UE awaits reception of scheduling assignment information from the Node B. When the UE fails to receive the scheduling assignment information until a predetermined elapses, it cannot identify the cause of the failure. For example, a reason for the Node B not to transmit the scheduling assignment information to the UE can be lack of radio resources available to the UE in view of the ROT, or the Node B's failure to receive the buffer status information in the scheduling interval 804 with $CNT_{sch\_int}$=15. Therefore, if the scheduling assignment information is not received until time expiration, the UE retransmits the current buffer status information a predetermined time (i.e., the buffer retransmission interval $T_{bs,re}$) after the transmission of the previous buffer status information. Because $T_{bs,re}$ is nine times the duration of $T_{sch\_int}$, the UE retransmits the buffer status information to the Node B in a scheduling interval 810 with $CNT_{sch\_int}$=24. While it is described that the buffer status information is "retransmitted", the retransmitted buffer status information represents the amount of buffered data measured in the scheduling interval 810. $T_{bs,re}$ may be set by the RNC and transmitted to the UE.

The Node B also transmits the scheduling assignment information to the UE within $T_{bs,re}$, after receiving the buffer status information. Therefore, if the UE fails to receive the scheduling assignment information after transmitting the buffer status information, it considers that the Node B has not received the buffer status information. After transmitting the first buffer status information, if the UE fails to receive the scheduling assignment information from the Node B within $T_{bs,re}$, it retransmits the buffer status information and the CSI $T_{bs,re}$ later. In a time period 816, the Node B transmits scheduling assignment information generated according to the buffer status information received in the scheduling interval 810 with $CNT_{sch\_int}=24$

In a time period 818, the Node B estimates the amount of transmission packet data of the UE and, if the estimated data amount is less than the threshold, transmits a Scheduling Release message to the UE. The UE discontinues transmission of the buffer status information and CSI to the Node B. Although not shown, if the amount of packet data queued in the EUDCH data buffer is below the threshold, the UE discontinues transmission of the buffer status information and CSI to the Node B.

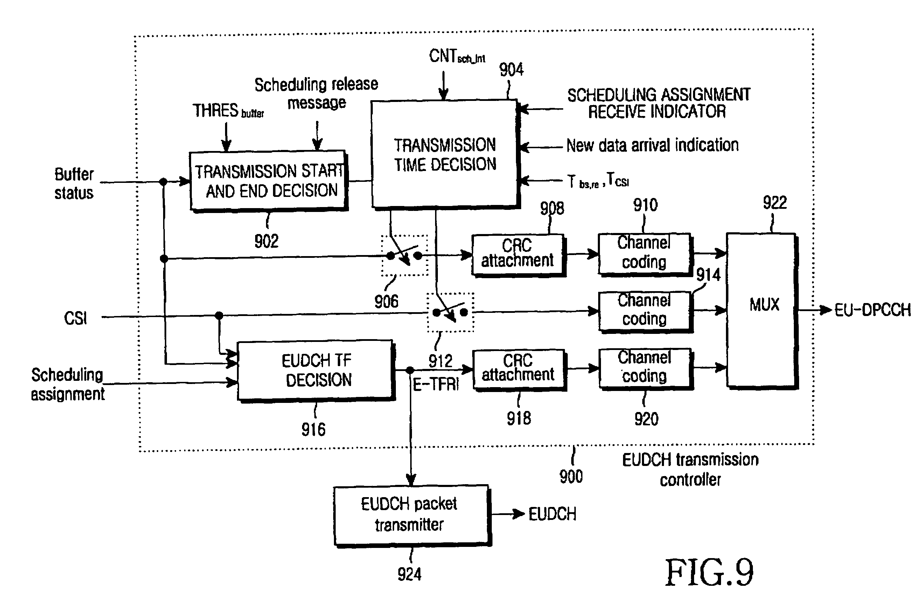

FIG. 9 is a block diagram of an EUDCH transmission controller 900 in the UE according to the embodiment of the present invention. Referring to FIG. 9, a transmission start and end decider 902 decides the start and end of transmission of buffer status information and CSI. The transmission start is determined by comparing input buffer status information with a predetermined threshold. If the buffer status information indicating the amount of packet data stored in the EUDCH data buffer is at least equal to the threshold, the transmission start and end decider 902 outputs a start signal, determining that it is time to start to transmit the buffer status information and the CSI. The transmission end is a time when a Scheduling Release message is received from the Node B.

However, when the buffer status information is less than the threshold, the transmission start and end decider 902 outputs an end signal, determining that it is time to terminate the transmission of the buffer status information and the CSI.

A transmission time decider 904, upon receiving the start signal from the transmission start and end decider 902, determines the transmission time points of the buffer status information and CSI. The transmission time points are represented by $CNT_{sch\_int}$ as illustrated in FIG. 8. The transmission time decider 904 activates a buffer status switch 906 and a CSI switch 912 in scheduling intervals corresponding to the transmission time points of the buffer status information and the CSI.

More specifically, after transmitting the first CSI at the start time point of CSI transmission, the transmission time decider 904 activates the CSI switch 912 to periodically transmit the CSI in scheduling intervals, which are determined according to $T_{CSI}$. When a new data arrival indication indicates generation of new data in the EUDCH data buffer, the transmission time decider 904 activates the buffer status switch 906. The transmission time decider 904 controls the buffer status switch 906 and the CSI switch 912 according to a scheduling assignment receive indication and $T_{bs,re}$.

When the scheduling assignment receive indicator does not indicate reception of scheduling assignment information within $T_{bs,re}$, after transmission of the previous buffer status information, the transmission time decider 904 activates the buffer status switch 906. When the scheduling assignment receive indicator does not indicate reception of scheduling assignment Information within $T_{bs,re}$, after transmission of the first buffer status information, the transmission time decider 904 simultaneously activates the buffer status switch 906 and the CSI switch 912.

As the buffer status switch 906 is activates, it switches the buffer status information to a CRC adder 908. The buffer status information is attached with a CRC in the CRC adder 908 and channel-encoded in a channel encoder 910. The channel-coded buffer status information is applied to the input of a multiplexer (MUX) 922. As the CSI switch 912 is activates, it switches the CSI to a channel encoder 914. The CSI is channel-encoded in the channel encoder 914 and input to the MUX 922.

An EUDCH TF (Transport Format) decider 916 determines the TF of packet data for the EUDCH service based on the scheduling assignment information received from the Node B and generates an E-TFRI representing the determined TF. The E-TFRI is added with CRC bits in a CRC adder 918 and channel-encoded in a channel encoder 920. The channel-coded E-TFRI is input to the MUX 922. The MUX 922 multiplexes the coded buffer status information, CSI and E-TFRI and transmits the multiplexed signal on the EU-DPCCH. An EUDCH packet transmitter 924 transmits the packet data stored in the EUDCH data buffer according to the TF decided by the EUDCH TF decider 916.

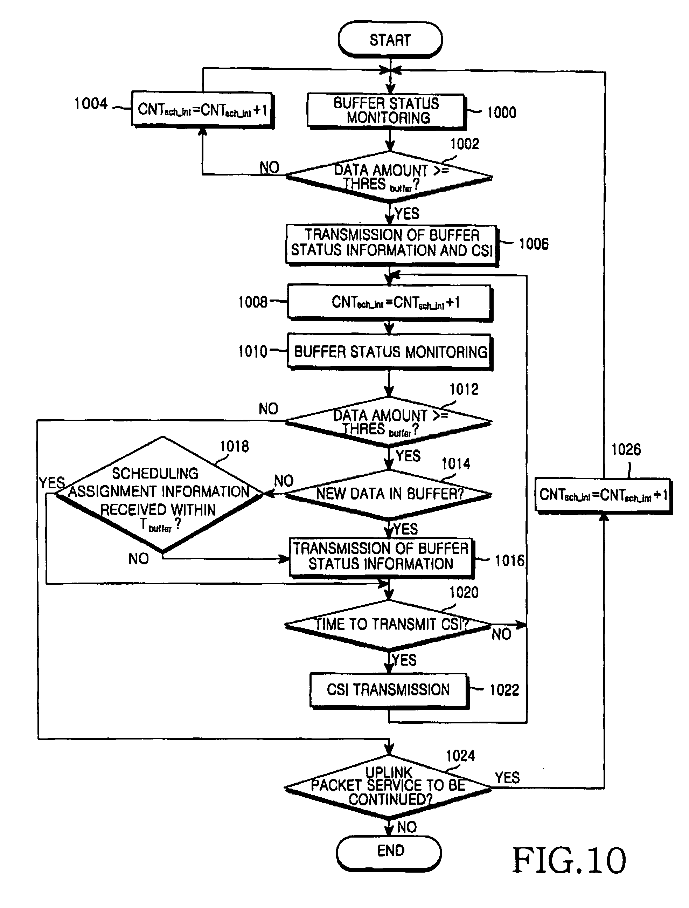

FIG. 10 is a flowchart illustrating an operation of a transmitter in the UE according to the embodiment of the present invention. Referring to FIG 10, the UE monitors its buffer status, that is, the amount of data stored in the EUDCH data buffer in step 1000 and determines if the data amount is at least equal to the threshold. $THRES_{buffer}$ in step 1002. If the data amount is at least equal to $THRES_{buffer}$, the UE proceeds to step 1006. If the data amount is less than $THRES_{buffer}$, the UE proceeds to step 1004. In step 1004, the UE waits until the next scheduling interval, and returns to step 1000 to monitor the EUDCH data buffer.

In step 1006, the UE transmits buffer status information and CSI to the Node B, waits until the next scheduling interval in step 1008, and monitors the EUDCH data buffer in step 1010. In step 1012, the UE determines whether or not to continue transmitting the buffer status information and the CSI. The determination is made by comparing the amount of packet data stored in the EUDCH data buffer with $THRES_{buffer}$. If the data amount is still at least equal to $THRES_{buffer}$, the UE proceeds to step 1014 to continue transmitting the buffer status information and the CSI. If the data amount is less than $THRES_{buffer}$, the UE proceeds to step 1024. In step 1024, the UE determines whether or not to continue the EUDCH data service. If the UE determines to continue the EUDCH data service, it waits until the next scheduling interval in step 1026 and returns to step 1000. If the UE determines not to continue the EUDCH data service, it terminates the procedure.

In step 1014, the UE determines if new data has been generated in the EUDCH data buffer. Upon generation of the new data, the UE proceeds to step 1016; otherwise, it proceeds to step 1018. In step 1018, the UE determines if scheduling assignment information has been received from the Node B within the buffer retransmission period $T_{bs,re}$, after transmission of the previous buffer status information. If the scheduling assignment information has been received, the UE proceeds to step 1020. If the scheduling assignment information has not been received, the UB transmits the buffer status information in step 1016. Although not depicted in step 1016 in FIG. 10, if the scheduling assignment information has not been received within $T_{bs,re}$ after the transmission of the first buffer status information in step 1018, the UE transmits the CSI along with the buffer status information.

In step 1020, the UE determines if the current scheduling interval is a transmission time point of the CSI determined by a CSI transmission interval received from the RNC. If the current scheduling index is identical to a transmission time of the CSI, the UE transmits the CSI in step 1022 and returns to step 1008. However, if the CSI is not supposed to be transmitted in the current scheduling interval, the UE returns to step 1008.

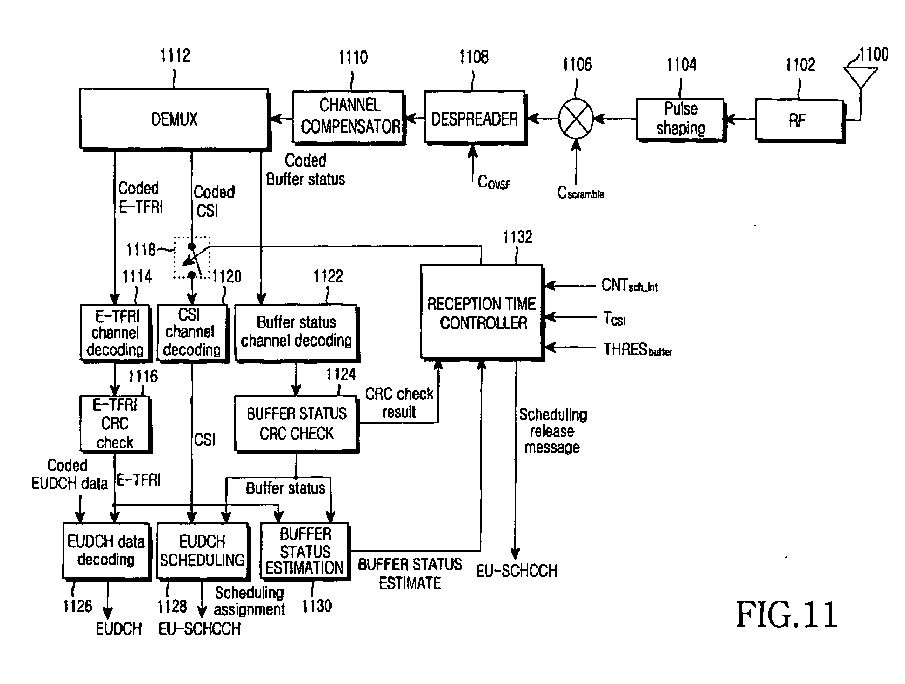

FIG. 11 is a block diagram illustrating a receiver in the Node B for receiving the buffer status information and CSI according to the embodiment of the present invention. Referring to FIG 11, an antenna 1100 receives an RF signal from the UE. An RF processor 1102 downconverts the RF signal to a baseband signal. A pulse shaping filter 1104 converts the baseband signal to a digital signal. A descrambler 1106 descrambles the digital signal with a scrambling code $C_{scramble}$. The descrambled signal is multiplied by an OVSF code $C_{OVSF}$ in a despreader 1108 and transmitted to a demultiplexer (DEMUX) 1112 through a channel compensator 1110. The DEMUX 1112 demultiplexes a signal received from the channel compensator 1110 into coded buffer status information, CSI, and E-TFRI. Because a CSI switch 1118 is activated at a first time, the coded buffer status information and the coded CSI are provided to a buffer status channel decoder 1122 and a CSI channel decoder 1120, respectively.

The buffer status channel decoder 1122 decodes the coded buffer status information. A buffer status CRC checker 1124 checks a CRC of the decoded buffer status information and provides a CRC check result to a CSI reception time controller 1132. The CSI reception time controller 1132 determines by the CRC check result if the buffer status information has been received from the UE. If the CRC check result is good, which implies that the buffer status information has been received from the UE, the CSI reception time controller 1132 determines that it is the first reception time of the CSI and activates the CSI switch 1118. Upon receiving the first buffer status information, the CSI reception time controller 1132 determines CSI reception times using $CNT_{sch\_int}$, $T_{CSI}$, and $THRES_{buffer}$, and activates the CSI switch 1118 in scheduling intervals corresponding to the CSI reception times.

The CSI channel decoder 1120 channel-decodes the coded CSI. An EUDCH scheduler 1128 generates scheduling assignment information using the CSI received from the CSI channel decoder 1120 and the buffer status information received from the buffer status CRC checker 1124. The scheduling assignment information is transmitted to the UE on the EU-SCHCCH. An E-TFRI channel decoder 1114 channel-decodes the coded E-TFRI received from the DEMUX 1112. An E-TFRI CRC checker 1116 checks a CRC of the E-TFRI. If the CRC check result is good, the E-TFRI is provided to an EUDCH data decoder 1126. The EUDCH data decoder 1126 decodes EUDCH data received on the EU-DPDCH from the UE using the E-TFRI.

A UE buffer status estimator 1130 estimates the buffer status of the UE using the buffer status information received from the buffer status CRC checker 1124 and the E-TFRI received from the E-TFRI CRC checker 1116. The buffer status estimate is provided to the CSI reception time controller 1132. If the buffer status estimate is less than $THRES_{buffer}$, the CSI reception time controller 1132 determines that it is time to terminate the reception of the buffer status information and the CSI and controls the EU-SCHCCH transmitter illustrated in FIG. 5B to transmit a Scheduling Release message to the UE.

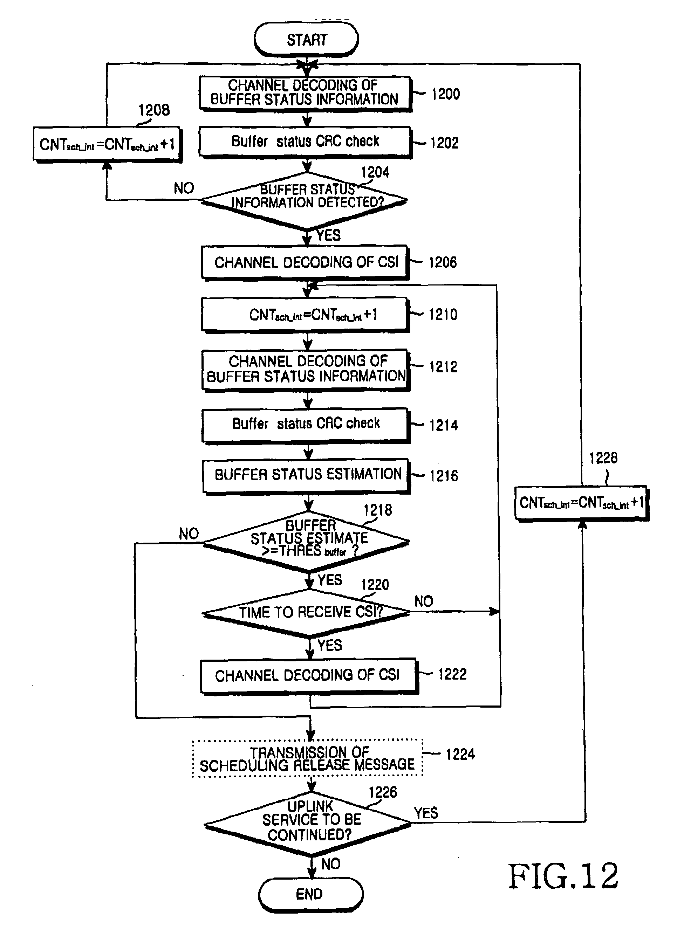

FIG 12 is a flowchart illustrating an operation for receiving buffer status information and CSI in the Node B according to the embodiment of the present invention. Referring to FIG 12, the Node B channel-decodes coded buffer status information received from the UE in step 1200 and CRC-checks the decoded buffer status information in step 1202. Using the CRC check result, the Node B determines if the UE has transmitted the buffer status information in the current scheduling interval in step 1204. If the CRC check is passed, i.e., the UE has transmitted the buffer status information in the current scheduling interval, the buffer status information is provided to the EUDCH scheduler and the Node B proceeds to step 1206. If the CRC check is failed, the Node B waits until the next scheduling interval in step 1208 and returns to step 1200.

In step 1206, the Node B channel-decodes coded CSI following the buffer status information, provides the decoded CSI to the EUDCH scheduler and in step 1210, and waits until the next scheduling interval. The Node B decodes coded buffer status information received from the UE in step 1212 and CRC-checks the decoded buffer status information in step 1214. If the CRC check is passed, the buffer status information is provided to the EUDCH scheduler and the Node B goes to step 1216.

In step 1216, the Node B estimates the buffer status of the UE using the last received buffer status information and the amount of received data. The received data amount is known from the E-TFRI and the buffer status is estimated by subtracting the received data amount from the last received buffer status information. Because the CRC is passed in step 1214, the last buffer status information is the buffer status information, which was channel-decoded in step 1212.

In step 1218, the Node B determines if the buffer status estimate is at least equal to $THRES_{buffer}$, If the buffer status estimate is at least equal to $THRES_{buffer}$, the Node B proceeds to step 1220. However, if the buffer status estimate is less than $THRES_{buffer}$, the Node B transmits a Scheduling Release message to the UE in step 1224 and proceeds to step 1226.

It should be noted that Step 1224 is marked with a dotted line to indicate that it is optional. Without step 1224, the procedure jumps from step 1218 to step 1226. In step 1226, the Node B determines whether to continue the EUDCH data service. If the Node B determines to continue the EUDCH data service, it waits until the next scheduling interval in step 1228 and returns to step 1200. However, if the Node B determines not to continue the EUDCH data service, it terminates the procedure.

In step 1220, the Node B determines whether the CSI is supposed to be received in the current scheduling interval according to the CSI reception interval received from the RNC. If the CSI is supposed to be received in the current scheduling interval, the Node B receives coded CSI in the scheduling interval and channel-decodes it in step 1222 and returns to step 1210. If the CSI is not supposed to be received in the current scheduling interval, the Node B returns to step 1210. The decoded CSI is provided to the EUDCH scheduler.

Second Embodiment

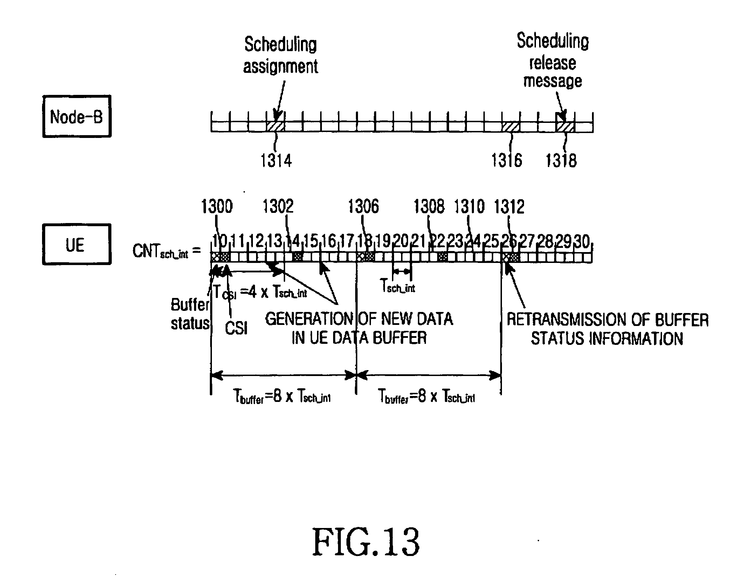

FIG. 13 illustrates EU-DPCCH signaling for scheduling assignment between the UE and the Node B according to another embodiment of the present invention. $T_{sch\_int}$ denotes a scheduling interval and each scheduling interval is divided into a buffer status information part and a CSI part. $CNT_{sch\_int}$ denotes the index of a scheduling interval. $T_{CSI}$ and $T_{buffer}$ denote a CSI transmission interval and a transmission interval of buffer state information, respectively.

In a scheduling interval 1300 with $CNT_{sch\_int}$=10, the UE initially transmits buffer status information and CSI to the Node B, when determining that the amount of packet data stored in the EUDCH data buffer is at least equal to a scheduling threshold $THRES_{buffer}$. The Node B generates scheduling assignment information based on the buffer status information and the CSI and transmits the scheduling assignment information in a time period 1314. An ROT is considered in determining the scheduling assignment information.

In a scheduling interval 1302 with $CNT_{sch\_int}$=14, the UE transmits only the CSI to the Node B. Because $T_{CSI}$ is four times the duration of $T_{sch\_int}$, the CSI is transmitted in scheduling intervals 1300, 1302, 1306, 1308, and 1312 with $CNT_{sch\_int}$= 10, 14, 18, 22, and 26, respectively.

Upon generation of packet data for the Node B in the EUDCH data buffer in scheduling intervals with $CNT_{sch\_int}$=13 and 16, the UE transmits the buffer status information to the Node B $T_{buffer}$ after the first buffer status transmission in the scheduling interval 1300. That is, upon generation of new data to be transmitted to the Node B, the UE transmits the buffer status information according to the transmission interval of the buffer status information. If new packet has not been generated in the EUDCH data buffer for the current $T_{buffer}$, the buffer status information is not transmitted, even if it is time to transmit the buffer status information according to $T_{buffer}$. Because new data is generated in the scheduling intervals with $CNT_{sch\_int}$=13 and 16 in FIG. 13, the buffer status information is transmitted in a scheduling interval 1306 with $CNT_{sch\_int}$=18, 8 scheduling intervals after the scheduling interval with $CNT_{sch\_int}$=10.

After the transmitting the buffer status information, the UE awaits reception of scheduling assignment information from the Node B. When the UE fails to receive the scheduling assignment information until $T_{buffer}$ elapses, it transmits the current buffer status information $T_{buffer}$, after the transmission of the previous buffer status information. The Node B transmits the scheduling assignment information to the UE within $T_{buffer}$ after receiving the buffer status information. Therefore, if the UE fails to receive the scheduling assignment information after transmitting the buffer status information, it determines that the Node B has not received the buffer status information. In a scheduling interval 1312 with $CNT_{sch\_int}$=26, the UE retransmits the buffer status information to the Node B in the illustrated case. If the UE fails to receive the scheduling assignment information within $T_{buffer}$, after transmission of the first buffer status information, it retransmits the buffer status information and the CSI together as in the scheduling interval 1312 with $CNT_{sch\_int}$ =26.

In a time period 1318, the Node B estimates the amount of transmission packet data of the UE and, if the estimated data amount is less than $THRES_{buffer}$, transmits a Scheduling Release message to the UE. The UE discontinues transmission of the buffer status information and CSI to the Node B. Although not shown, if the amount of packet data queued in the EUDCH data buffer is THRES$_{buffer}$, the UE discontinues transmission of the buffer status information and CSI to the Node B.

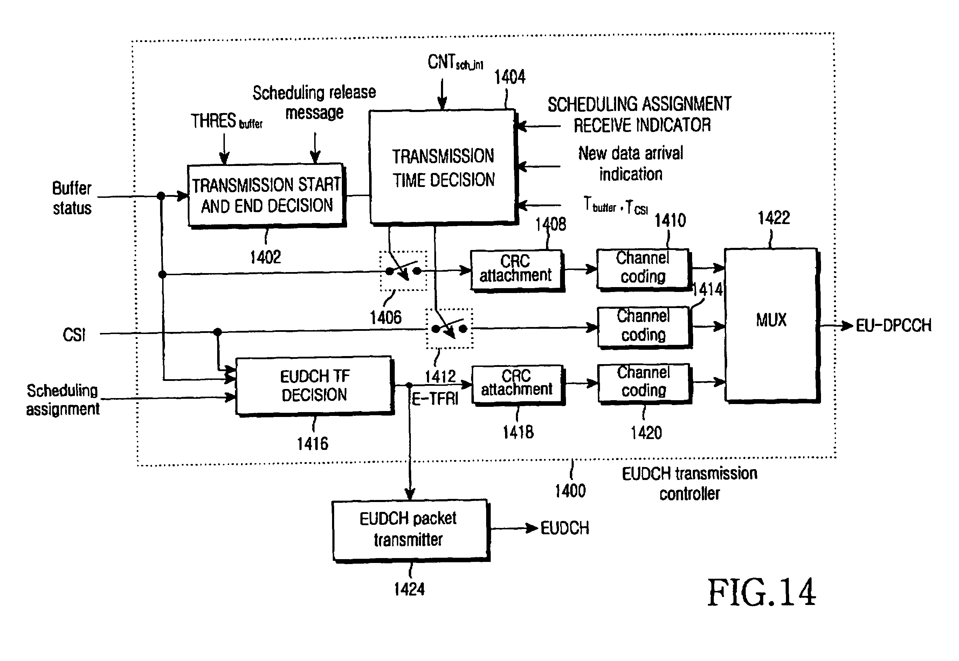

FIG. 14 is a block diagram illustrating an EUDCH transmission controller 1400 in the UE according to the second embodiment of the present invention. The components, except a transmission start and end decider 1402 and a transmission time decider 1404, that is, an EUDCH TF decider 1416, CRC adders 1408 and 1418, channel encoders 1410, 1414, and 1420, a MUX 1422, and an EUDCH packet transmitter 1424, are identical in configuration and operation to their counterparts illustrated in FIG 9. Therefore, their description is not provided here and only the difference between the EUDCH transmission controller 1400 and the EUDCH transmission controller 900 will be described below.

Referring to FIG 14, the transmission time decider 1404 determines the transmission time points of the buffer status information and the CSI after their first transmission time determined by the transmission start and end decider 1402. As described above with reference to FIG 13, the transmission time decider 1404 activates a buffer status switch 1406 and a CSI switch 1412 at the first transmission time of the buffer status information and the CSI. After transmitting the first CSI at the first transmission time point, the transmission time decider 1404 activates the CSI switch 1412 in scheduling intervals determined according to T$_{CSI}$ to periodically transmit the CSI.

The transmission time decider 1404, when a new data arrival indication indicates generation of new data in the EUDCH data buffer, activates the buffer status switch 1406. That is, at the first buffer status transmission time after the new data arrival indication indicates generation of new data, the transmission time decider 1404 activates the buffer status switch 1406.

When a scheduling assignment receive indicator does not indicate reception of scheduling assignment information within T$_{buffer}$ after transmission of the buffer status information, the transmission time decider 1404 activates the buffer status switch 1406. When the scheduling assignment receive indicator does not indicate reception of scheduling assignment information within T$_{buffer}$ after transmission of the first buffer status information, the transmission time decider 1404 simultaneously activates the buffer status switch 1406 and the CSI switch 1412.

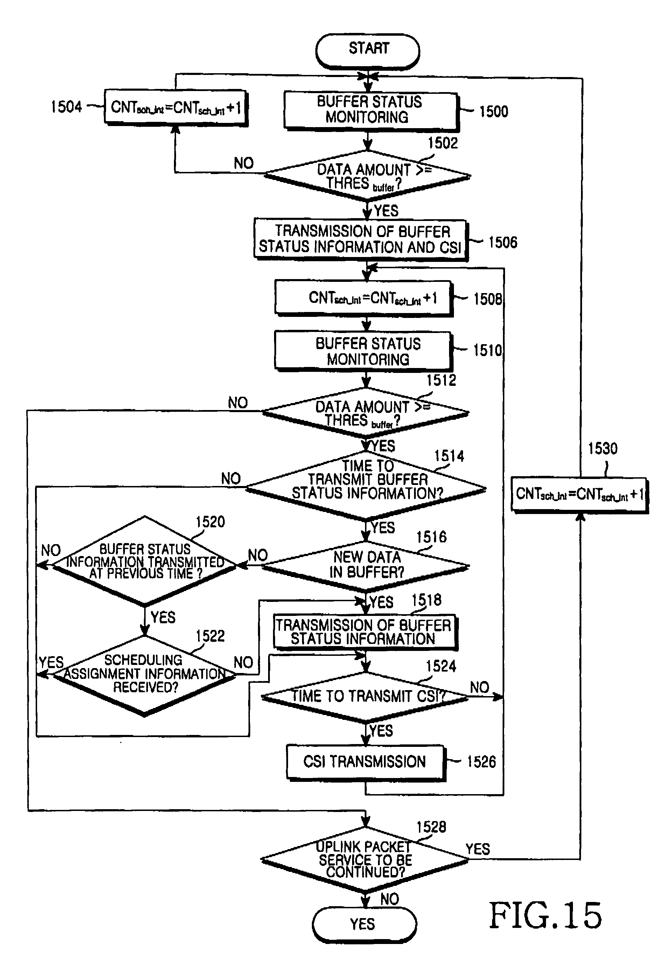

FIG 15 is a flowchart illustrating the operation of the transmitter in the UE according to the second embodiment of the present invention. Referring to FIG 15, the UE monitors its buffer status, that is, the amount of data stored in the EUDCH data buffer in step 1500 and determines if the data amount is at least equal to THRES$_{buffer}$ in step 1502. If the data amount is at least equal to THRES$_{buffer}$, the UE proceeds to step 1506. If the data amount is less than THRES$_{buffer}$, the UE proceeds to step 1504. In step 1504, the UE waits until the next scheduling interval, and returns to step 1500 to monitor the EUDCH data buffer.

In step 1506, the UE initially transmits buffer status information and CSI to the Node B, waits until the next scheduling interval in step 1508, and monitors the EUDCH data buffer in step 1510. In step 1512, the UE determines whether or not to continue transmitting the buffer status information and the CSI. The determination is made by comparing the amount of packet data stored in the EUDCH data buffer with THRES$_{buffer}$, as described above. If the data amount is still at least equal to THRES$_{buffer}$, the UE proceeds to step 1514 to continue transmitting the buffer status information and the CSI. If the data amount is less than THRES$_{buffer}$, the UE proceeds to step 1528.

In step 1528, the UE determines whether to continue the EUDCH data service. If the UE determines to continue the EUDCH data service, it waits until the next scheduling interval in step 1530 and returns to step 1500. If the UE determines not to continue the EUDCH data service, it terminates the procedure.

In step 1514, the UE determines if the buffer status information is to be transmitted in the current scheduling interval according to T$_{buffer}$. If the buffer status information is to be transmitted in the current scheduling interval, the UE proceeds to step 1516. If the buffer status information is not to be transmitted in the current scheduling interval, the UE proceeds to step 1524. In step 1524, the UE determines if new data has been generated in the EUDCH data buffer. Upon generation of the new data, the UE proceeds to step 1518; otherwise, it proceeds to step 1520.

In step 1520, the UE determines if the buffer status information has been transmitted at the previous transmission time of the buffer status information. If the buffer status information has been transmitted at the previous transmission time, the UE proceeds to step 1522. If the buffer status information has not been transmitted at the previous transmission time, the UE proceeds to step 1524. In step 1522, the UE determines if scheduling assignment information has been received from the Node B after the previous transmission time point of the buffer status information. If the scheduling assignment information has been received, the UB proceeds to step 1524. If the scheduling assignment information has not been received, the UE transmits proceeds to step 1518.

The UE transmits the buffer status information in step 1518. Although not depicted in step 1518 in FIG 15, if the previous buffer status information is the first buffer status information, the UE transmits both the buffer status information and the CSI in step 1518.

In step 1524, the UE determines whether the current scheduling interval is a transmission time point of the CSI according to T$_{CSI}$ that the RNC notified the UE of. If the CSI is supposed to be transmitted in the current scheduling index, the UE transmits the CSI in step 1526 and returns to step 1508. However, if the CSI is not supposed to be transmitted in the current scheduling interval, the UE returns to step 1508.

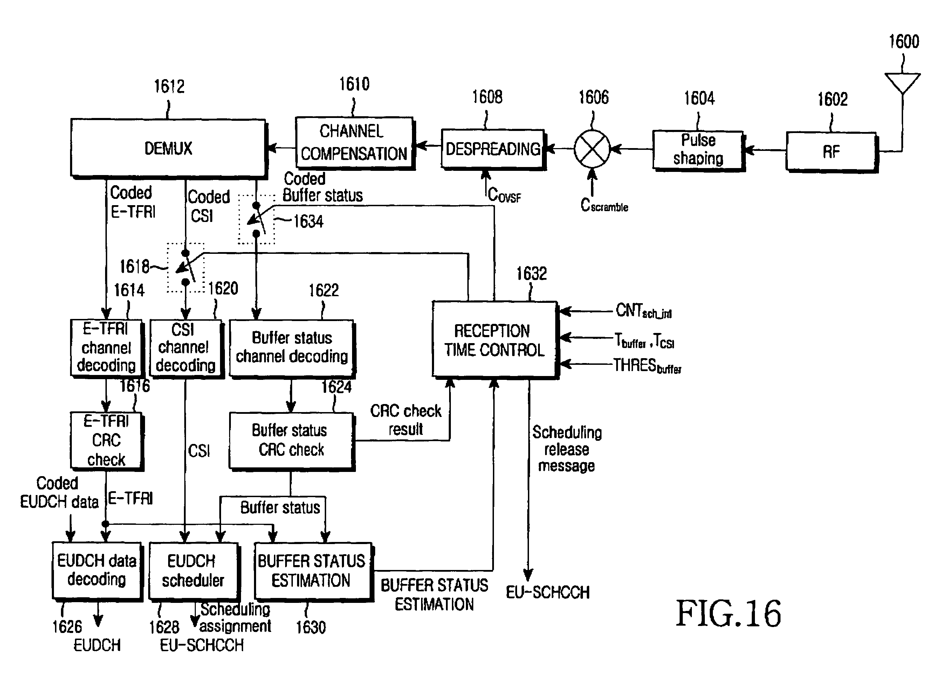

FIG. 16 is a block diagram illustrating a receiver in the Node B for receiving. the buffer status information and CSI according to the second embodiment of the present invention. Referring to FIG 16, an antenna 1600 receives an RF signal from the UE. An RF processor 1602 down converts the RF signal to a baseband signal. A pulse shaping filter 1604 converts the baseband signal to a digital signal. A descrambler 1606 descrambles the digital signal with a scrambling code $C_{scramble}$. The descrambled signal is multiplied by an OVSF code $C_{OVSP}$ in a despreader 1608 and transmitted to a DEMUX 1612 through a channel compensator 1610. The DEMUX 1612 demultiplexes a signal received from the channel compensator 1610 into coded buffer status information, CSI, and E-TFRI. Because a CSI switch 1618 and a buffer status switch 1634 are activated at a first time, the coded buffer status information and the coded CSI are provided to a buffer status channel decoder 1622 and a CSI channel decoder 1620, respectively.

The buffer status channel decoder 1622 decodes the coded buffer status information. A buffer status CRC checker 1624 checks a CRC of the decoded buffer status information and provides a CRC check result to a reception time controller 1632. Using the CRC check result, the reception time controller 1632 determines if the buffer status information has been received from the UE. If the CRC check result is good, which implies that the buffer status information has been received from the UE, the reception time controller 1632 determines that it is the first reception time of the CSI and activates the CSI switch 1618. Upon receipt of the first buffer status information, the reception time controller 1632 determines CSI reception time points using $CNT_{sch\_int}$ and $T_{CSI}$, and activates the CSI switch 1618 in scheduling intervals corresponding to the CSI reception time points.

Additionally, the reception time controller 1632 determines reception times of the buffer status information using $CNT_{sch\_int}$, and $T_{buffer}$, and activates the buffer status switch 1634 in scheduling intervals corresponding to the reception times of the buffer status information. Accordingly, the buffer status information is not always received at the determined reception times. That is, if new data is not generated in the data buffer of the UE and the Node B transmits scheduling assignment information to the UE within the latest transmission interval of the buffer status information, the buffer status information is not received at its reception times.

The CSI channel decoder 1620 channel-decodes the coded CSI. An EUDCH scheduler 1628 generates scheduling assignment information using the CSI received from the CSI channel decoder 1620 and the buffer status information received from the buffer status CRC checker 1624. An E-TFRI channel decoder 1614 channel-decodes the coded E-TFRI received from the DEMUX 1612. An E-TFRI CRC checker 1616 checks a CRC of the E-TFRI. If the CRC check result is good, the E-TFRI is provided to an EUDCH data decoder 1626. The EUDCH data decoder 1626 decodes EUDCH data received on the EU-DPDCH from the UE using the E-TFRI.

A UE buffer status estimator 1630 estimates the buffer status of the UE using the buffer status information received from the buffer status CRC checker 1624 and the E-TFRI received from the E-TFRI CRC checker 1616. The buffer status estimate is provided to the reception time controller 1632. If the buffer status estimate is less than $THRES_{buffer}$, the reception time controller 1632 concludes that it is time to terminate the reception of the buffer status information and the CSI and controls the EU-SCHCCH transmitter illustrated in FIG. 5B to transmit a Scheduling Release message to the UE.

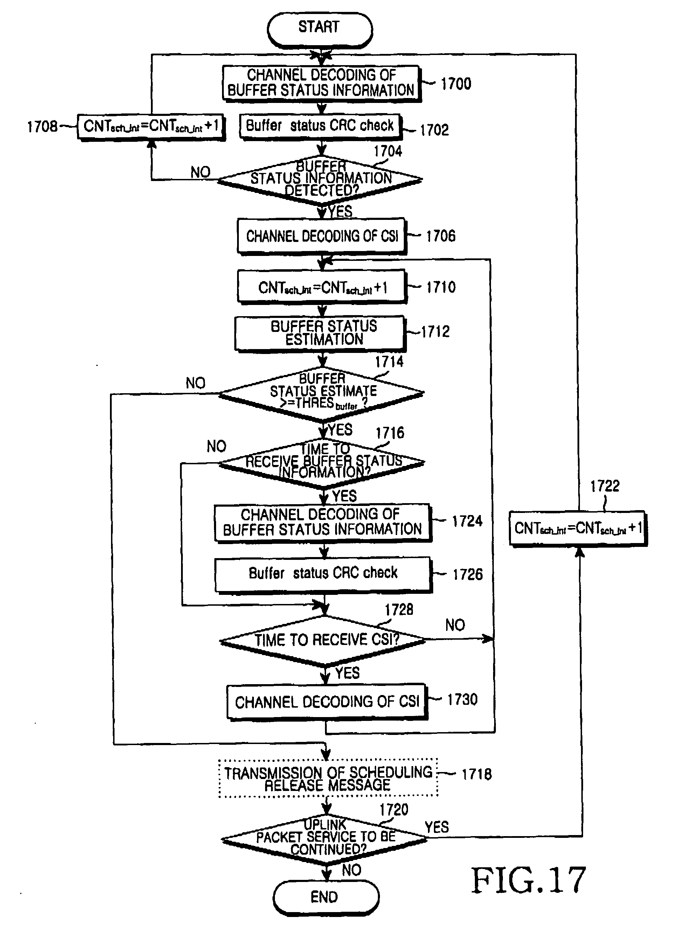

FIG. 17 is a flowchart illustrating an operation for receiving buffer status information and CSI in the Node B according to the second embodiment of the present invention. Referring to FIG. 17, the Node B channel-decodes coded buffer status information received from the UE in step 1700 and CRC-checks the decoded buffer status information in step 1702. Using the CRC check result, the Node B determines if the UE has transmitted the buffer status information in the current scheduling interval in step 1704. If the CRC check is passed, the buffer status information is provided to the EUDCH scheduler and the Node B proceeds to step 1706. If the CRC check is failed, the Node B waits until the next scheduling interval in step 1708 and returns to step 1700.

In step 1706, the Node B channel-decodes coded CSI following the buffer status information, provides the decoded CSI to the EUDCH scheduler and in step 1710, and waits until the next scheduling interval.

In step 1712, the Node B estimates the buffer status of the UE using the last received buffer status information and the amount of received data. The received data amount is known from the E-TFRI and the buffer status is estimated by subtracting the received data amount from the last received buffer status information. In step 1714, the Node B determines if the buffer status estimate is at least equal to $THRES_{buffer}$. If the buffer status estimate is at least equal to $THRES_{buffer}$, the Node B proceeds to step 1716. However, if the buffer status estimate is less than $THRES_{buffer}$, the Node B transmits a Scheduling Release message to the UE in step 1718 and proceeds to step 1720. Step 1718 is optional depending on system implementation. In step 1720, the Node B determines whether or not to continue the EUDCH data service. If the Node B determines to continue the EUDCH data service, it waits until the next scheduling interval in step 1722 and returns to step 1700. However, if the Node B determines not to continue the EUDCH data service, it terminates the procedure.

In step 1716, the Node B determines if the buffer status information is supposed to be received in the current scheduling interval according to its reception interval received from the RNC. If the buffer status information is supposed to be received in the current scheduling interval, the Node B proceeds to step 1724. If the buffer status information is not supposed to be received in the current scheduling interval, the Node B proceeds to step 1728. The Node B receives coded buffer status information in the current scheduling interval, channel-decodes it in step 1724, and checks the CRC of the decoded buffer status information in step 1726. If the CRC check is passed, the buffer status information is provided to the EUDCH scheduler. In step 1728, the Node B determines if the CSI is supposed to be received in the current scheduling interval according to its reception interval received from the RNC. If the CSI is supposed to be received in the current scheduling interval, the Node B receives coded CSI in the current scheduling interval, channel-decodes it in step 1730, and returns to step 1710. If the CSI is not supposed to be received in the current scheduling interval, the Node B returns to step 1710. The decoded CSI is provided to the EUDCH scheduler.

Third Embodiment

In a third embodiment of the present invention, the RNC controls the transmission times of buffer status information and CSI for a plurality of UEs in order to prevent the increase of the uplink interference caused by uplink signaling. The RNC controls the UEs to transmit buffer status information and CSI in different scheduling intervals. The transmission times of the buffer status information and CSI are calculated by Equation (3) and Equation (4), respectively,

$$(CNT_{sch\_int} - offset_{buffer})mod(T_{buffer}/T_{sch\_int}) = 0 \tag{3}$$

$$(CNT_{sch\_int} - offset_{CSI})mod(T_{CSI}/T_{sch\_int}) = 0 \tag{4}$$

where mod is an operator that computes the remainder of the division between two operands, $CNT_{sch\_int}$ is a scheduling interval index, and $offset_{buffer}$ is an integer specific to each UE to prevent a plurality of UEs from providing the EUDCH service from transmitting buffer status information at the same time and thus increasing the measured ROT of the Node B. Each UE transmits the buffer status information to the Node B in scheduling intervals satisfying Equation (3) according to its $offset_{buffer}$. Similarly, $offset_{CSI}$ is an integer specific to each UE to prevent the UEs from transmitting CSIs at the same time and thus increasing the measured ROT of the Node B. Each UE transmits the CSI to the Node B in scheduling intervals satisfying Equation (4) according to its $offset_{CSI}$. $offset_{buffer}$ and $offset_{CSI}$ can be identical or different.

The UE transmits the buffer status information only at a transmission time determined by Equation (3) even if the amount of packet data queued in its EUDCH data buffer is at least equal to a predetermined threshold. Also, the Node B checks if the buffer status information has been received only at a reception time determined by Equation (3), thereby enabling limited radio resources of the Node B to be shared among a plurality of UEs.

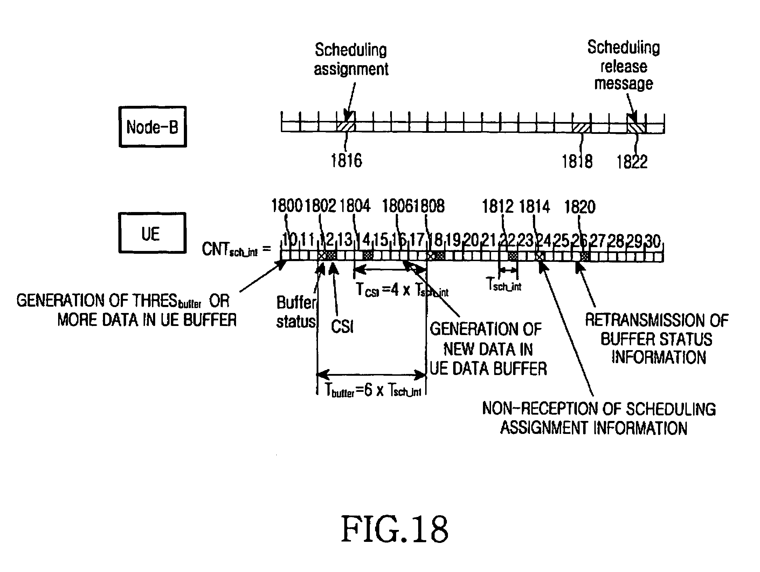

FIG 18 illustrates EU-DPCCH signaling for scheduling assignment between the Node B and the UE according to the third embodiment of the present invention. Referring to FIG 18, the UE has $offset_{buffer}$ set to 0 and $offset_{CSI}$ set to 0. $T_{buffer}$ is six times $T_{sch\_int}$, and $T_{CSI}$ is four times $T_{sch-int}$. According to Equation (3), the buffer status information is transmitted in scheduling intervals 1802, 1808, and 1814 with $CNT_{sch\_INT}$=12, 18, and 24, respectively. According to Equation (4), the CSI is transmitted in scheduling intervals 1804, 1808, 1812, and 1820 with $CNT_{sch\_INT}$ =14, 18, 22, and 26, respectively.

In the scheduling interval 1800 with $CNT_{sch\_INT}$=10, the amount of packet data to be transmitted to the Node B is at least equal to a predetermined threshold $THRES_{buffer}$. Because the buffer status information is not supposed to be transmitted in the scheduling interval 1800 with $CNT_{sch\_INT}$ =10, the UE waits until the scheduling interval 1802 with $CNT_{sch\_INT}$ =12 and transmits the buffer status information in the scheduling interval 1802 with $CNT_{sch\_INT}$ =12. Although the scheduling interval 1802 with $CNT_{sch\_INT}$=12 is not a CSI transmission time, the UE transmits the CSI together with the buffer status information because the buffer status information is initially transmitted. Thereafter, the UE transmits the buffer status information and the CSI at their respective transmission times.

New packet data is generated in the EUDCH data buffer in a scheduling interval 1806 with $CNT_{sch\_INT}$=16. Because the scheduling interval 1806 with $CNT_{sch\_INT}$= 16 is not a transmission time for the buffer status information, the UE transmits it in the scheduling interval 1808 with $CNT_{sch\_INT}$=18.

In a time period 1816, the Node B generates scheduling assignment information based on the buffer status information and CSI received in the scheduling interval 1802 and transmits the scheduling assignment information to the UE. Accordingly, upon receipt of the buffer status information from the UE, the Node B always transmits the scheduling assignment information to the UE within $T_{buffer}$.

After transmitting the buffer status information at each determined transmission time, the UE awaits reception of the scheduling assignment information. However, the UE does not know if the Node B has received the transmitted buffer status information normally. Therefore, if the UE fails to receive the scheduling assignment information within $T_{buffer}$ after transmission of the buffer status information, it retransmits the buffer status information at the next transmission time set for the buffer status information. In the illustrated case of FIG 18, recognizing in a scheduling interval 1814 $CNT_{sch\_INT}$=24 that the scheduling assignment information has not been received within $T_{buffer}$ after transmission of the buffer status information in the scheduling interval 1808, the UE retransmits the buffer status information to the Node B. If the UE fails to receive the scheduling assignment information within $T_{buffer}$, after transmission of the first buffer status information, the UE retransmits both the buffer status information and the CSI to the Node B.

In a time period 1822, the Node B estimates the amount of transmission packet data of the UE and, if the estimated data amount is less than $THRES_{buffer}$, transmits a Scheduling Release message to the UE. The UE discontinues transmission of the buffer status information and CSI to the Node B. Although not shown, if the amount of packet data queued in the EUDCH data buffer is $THRES_{buffer}$, the UE discontinues transmission of the buffer status information and CSI to the Node B.

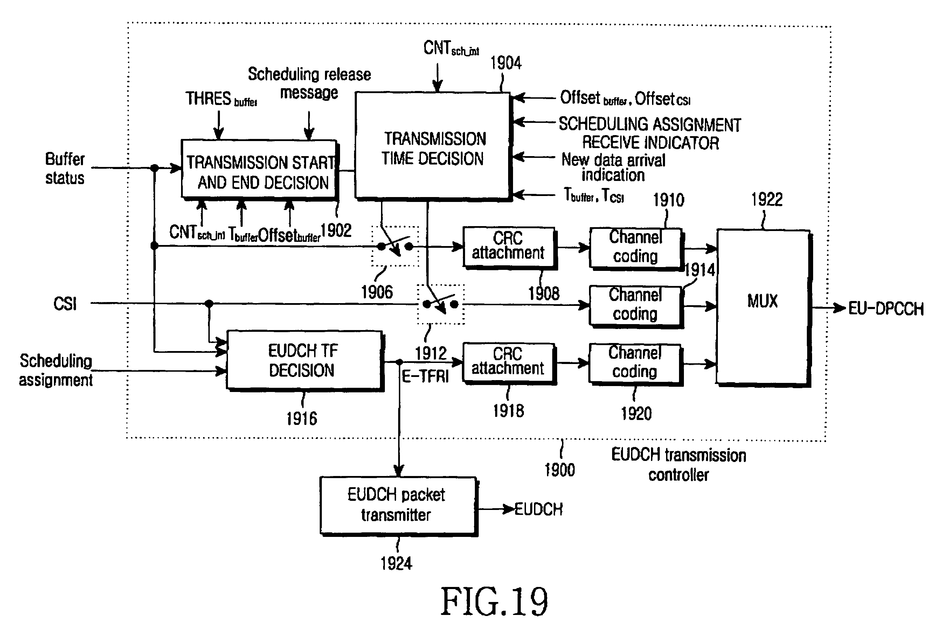

FIG 19 is a block diagram illustrating an EUDCH transmission controller 1900 in the UE according to the third embodiment of the present invention. The components in FIG 19, except a transmission start and end decider 1902 and a transmission time decider 1904, i.e., an EUDCH TF decider 1916, CRC adders 1908 and 1918, channel encoders 1910, 1914, and 1920, a MUX 1922, and an EUDCH packet transmitter 1924, are identical in configuration and operation to their counterparts illustrated in FIG 9. Therefore, their description is not provided here and only the difference between the EUDCH transmission controller 1900 and the EUDCH transmission controller 900 will be described below.

Referring to FIG 19, the transmission start and end decider 1902 determines the transmission start and end times of the buffer status information and the CSI. The transmission start is determined in consideration of the status of the EUDCH data buffer, $T_{buffer}$, $offset_{buffer}$, and $THRES_{buffer}$. The transmission of the buffer status information starts at the first of times set for the buffer status information after the buffer status information is at least equal to $THRES_{buffer}$. The CSI is initially transmitted together with the first buffer status information. When a Scheduling Release message is received from the Node B, the transmission of the buffer status information and the CSI is terminated. However, if the buffer status information is less than $THRES_{buffer}$, the transmission of the buffer status information and the CSI is terminated.

The transmission time decider 1904 determines the transmission times of the buffer status information and CSI after the transmission start decided by the transmission start and end decider 1902, as illustrated in FIG 18. The transmission time decider 1904 activates a buffer status switch 1906 and a CSI switch 1912 at the first transmission time of the buffer status information and the CSI.

After transmitting the first CSI at the first transmission time point, the transmission time decider 1904 activates the CSI switch 1912 in scheduling intervals determined according to $CNT_{sch\_int}$, $T_{CSI}$, and $Offset_{CSI}$, to periodically transmit the CSI. In a scheduling interval corresponding to the first transmission time alter a new data arrival indication indicates generation of new data in the EUDCH data buffer, the transmission time decider 1904 activates the buffer status switch 1906 to transmit the buffer status information. The transmission times of the buffer status information are determined according to $CNT_{sch\_int}$, $T_{buffer}$, and $Offset_{buffer}$.

The transmission time decider 1904 controls the buffer status switch 1906 and the CSI switch 1912 according to a scheduling assignment receive indicator and $T_{buffer}$. When the scheduling assignment receive indicator does not indicate reception of scheduling assignment information within $T_{buffer}$, after transmission of the buffer status information, the transmission time decider 1904 activates the buffer status switch 1906 at the next transmission time of the buffer status information. When the scheduling assignment receive indicator does not indicate reception of scheduling assignment information within $T_{buffer}$, after transmission of the first buffer status information, the transmission time decider 1904 simultaneously activates the buffer status switch 1906 and the CSI switch 1912.

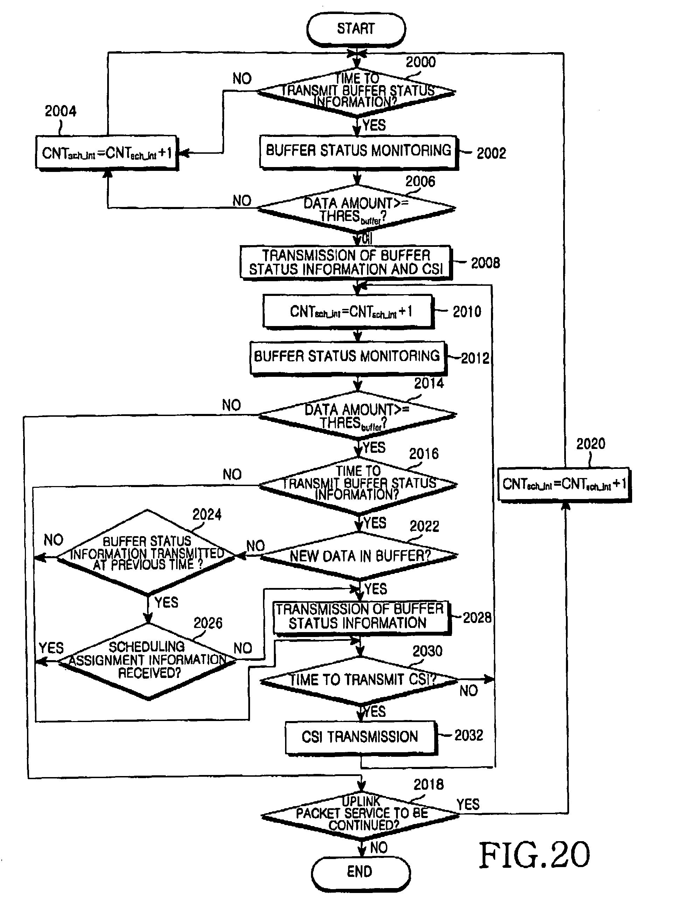

FIG 20 is a flowchart illustrating an operation of the transmitter in the UE according to the third embodiment of the present invention. Referring to FIG. 20, the UE determines if the current scheduling interval is a transmission time for buffer status information decided by Equation (3) in step 2000. If the current scheduling interval is a transmission time for buffer status information, the UE proceeds to step 2002. If the current scheduling interval is not a transmission time for buffer status information, the UE proceeds to step 2004. The UE monitors its buffer status, that is, the amount of data stored in the EUDCH data buffer in step 2002 and determines if the data amount is at least equal to $THRES_{buffer}$ in step 2006. If the data amount is at least equal to $THRES_{buffer}$, the UE proceeds to step 2008. If the data amount is less than $THRES_{buffer}$, the UE proceeds to step 2004. In step 2004, the UE waits until the next scheduling interval, and returns to step 2000 to monitor the EUDCH data buffer.

In step 2008, the UE initially transmits the buffer status information and CSI to the Node B, waits until the next scheduling interval in step 2010, and monitors the EUDCH data buffer in step 2012. In step 2014, the UE determines whether or not to continue transmitting the buffer status information and the CSI. The determination is made by comparing the amount of packet data stored in the EUDCH data buffer with $THRES_{buffer}$, as described above. If the data amount is still at least equal to $THRES_{buffer}$, the UE proceeds to step 2016 to continue transmitting the buffer status information and the CSI. If the data amount is less than $THRES_{buffer}$, the UE proceeds to step 2018.

In step 2018, the UE determines whether or not to continue the EUDCH data service. If the UE determines to continue the EUDCH data service, it waits until the next scheduling interval in step 2020 and returns to step 2000. If the UE determines not to continue the EUDCH data service, it terminates the procedure.

In step 2016, the UE determines if the buffer status information is to be transmitted in the current scheduling interval. If the buffer status information is to be transmitted in the current scheduling interval, the UE proceeds to step 2022. If the buffer status information is not to be transmitted in the current scheduling interval, the UE proceeds to step 2030.

In step 2022, the UE determines if new data has been generated in the EUDCH data buffer. Upon generation of the new data, the UE proceeds to step 2028; otherwise, it proceeds to step 2024.

In step 2024, the UE determines if the buffer status information has been transmitted at the previous transmission time of the buffer status information. If the buffer status information has been transmitted at the previous transmission time, the UE proceeds to step 2026. If the buffer status information has not been transmitted at the previous transmission time, the UE proceeds to step 2030.

In step 2026, the UE determines if scheduling assignment information has been received from the Node B after the previous transmission time point of the buffer status information. If the scheduling assignment information has been received, the UE proceeds to step 2030. If the scheduling assignment information has not been received, the UE proceeds to step 2028.

The UE transmits the buffer status information in step 2028. Although not depicted in step 2028 in FIG 20, if the previous buffer status information is the first buffer status information, the UE transmits both the buffer status information and the CSI in step 2028.

In step 2030, the UE determines if the current scheduling interval is a transmission time point of the CSI according to $T_{CSI}$ that the RNC notified the UE of. If the CSI is supposed to be transmitted in the current scheduling index, the UE transmits the CSI in step 2032 and returns to step 2010. However, if the CSI is not supposed to be transmitted in the current scheduling interval, the UE returns to step 2010.

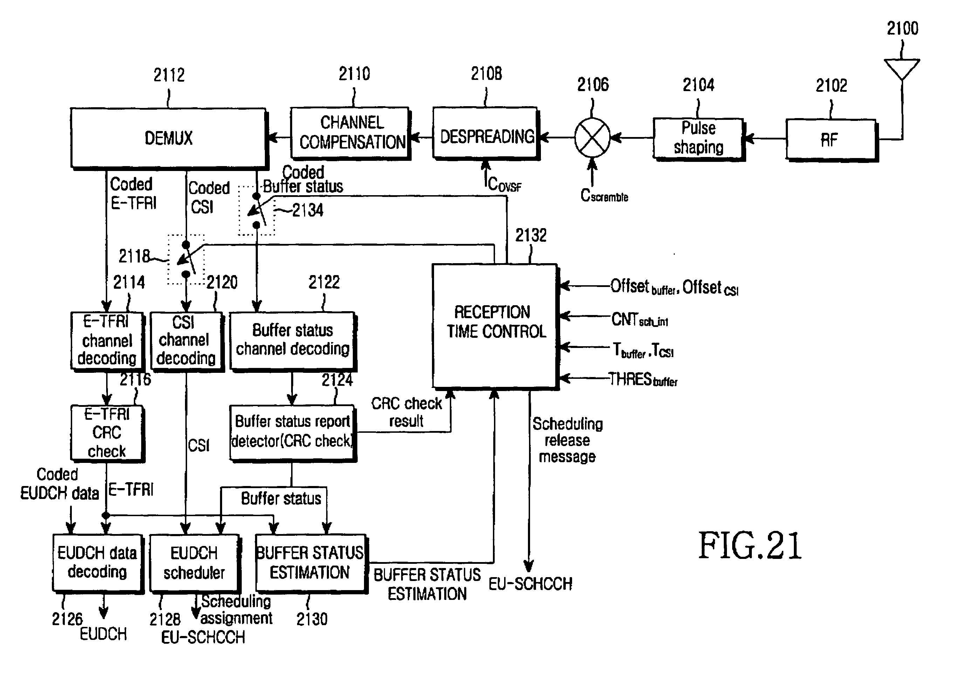

FIG. 21 is a block diagram illustrating a receiver in the Node B for receiving the buffer status information and CSI according to the third embodiment of the present invention. Referring to FIG 21, an antenna 2100 receives an RF signal from the UE. An RF processor 2102 downconverts the RF signal to a baseband signal. A pulse shaping filter 2104 converts the baseband signal to a digital signal. A descrambler 2106 descrambles the digital signal with a scrambling code $C_{sramble}$. The descrambled signal is multiplied by an OVSF code $C_{OVSF}$ in a despreader 2108 and transmitted to a DEMUX 2112 through a channel compensator 2110. The DEMUX 2112 demultiplexes a signal received from the channel compensator 2110 into coded buffer status information, CSI, and E-TFRI. Because a CSI switch 2118 and a buffer status switch 2134 are activated at a first time, the coded buffer status information and the coded CSI are provided to a buffer status channel decoder 2122 and a CSI channel decoder 2120, respectively.

The buffer status channel decoder 2122 decodes the coded buffer status information. A buffer status CRC checker 2124 checks a CRC of the decoded buffer status information and provides a CRC check result to a reception time controller 2132. Using the CRC check result, the reception time controller 2132 determines if the buffer status information has been received from the UE. If the CRC check result is good, which implies that the buffer status information has been received from the UE, the reception time controller 2132 activates the CSI switch 2118. If the received buffer status information is the first buffer status information, the reception time controller 2132 determines reception times of the CSI using $CNT_{sch\_int}$, $offset_{CSI}$, and $T_{CSI}$ and activates the CSI switch 2118 in scheduling intervals corresponding to the reception times of the CSI.

Additionally, the reception time controller 2132 determines reception times of the buffer status information using $CNT_{sch\_int}$, $offset_{buffer}$, and $T_{buffer}$ and activates the buffer status switch 2134 in scheduling intervals corresponding to the reception times of the buffer status information.

Accordingly, the buffer status information is not always received at the determined reception time points. That is, if new data is not generated in the data buffer of the UE and the Node B transmits scheduling assignment information to the UE within the latest transmission interval of the buffer status information, the buffer status information is not received at its reception times.

The CSI channel decoder 2120 channel-decodes the coded CSI. An EUDCH scheduler 2128 generates scheduling assignment information using the CSI received from the CSI channel decoder 2120 and the buffer status information received from the buffer status CRC checker 2124. An E-TFRI channel decoder 2114 channel-decodes the coded E-TFRI received from the DEMUX 2112.

An E-TFRI CRC checker 2116 checks a CRC of the E-TFRI. If the CRC check result is good, the E-TFRI is provided to an EUDCH data decoder 2126. The EUDCH data decoder 2126 decodes EUDCH data received on the EU-DPDCH from the UE using the E-TFRI.

A UE buffer status estimator 2130 estimates the buffer status of the UE using the buffer status information received from the buffer status CRC checker 2124 and the E-TFRI received from the E-TFRI CRC checker 2116. The buffer status estimate is provided to the reception time controller 2132. If the buffer status estimate is less than $THRES_{buffer}$, the reception time controller 2132 concludes that it is time to terminate the reception of the buffer status information and the CSI and controls the EU-SCHCCH transmitter illustrated in FIG. 5B to transmit a Scheduling Release message to the UE.

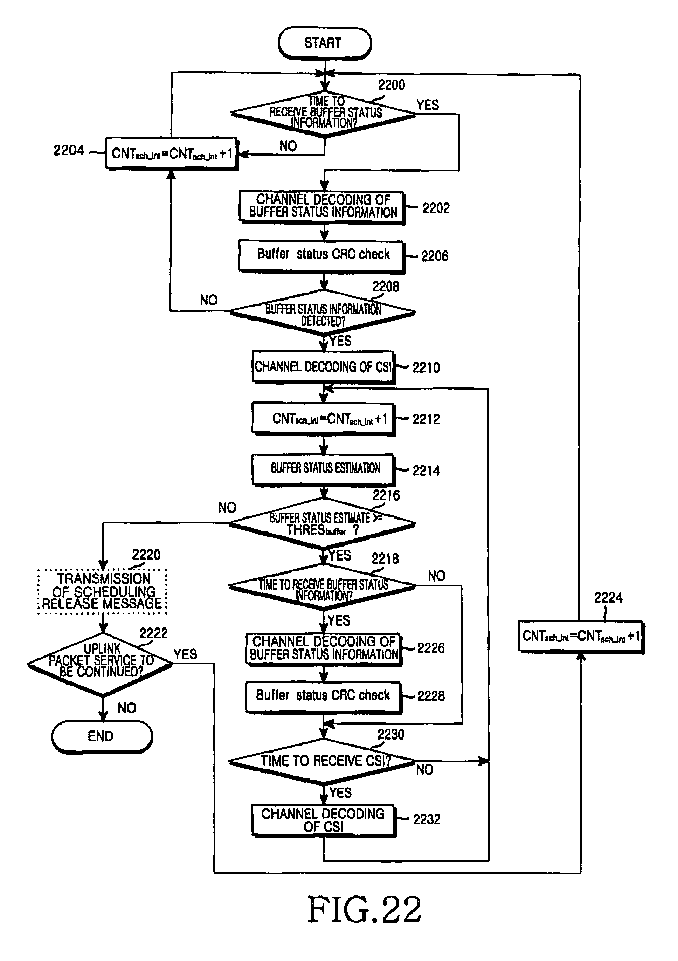

FIG. 22 is a flowchart illustrating an operation for receiving buffer status information and CSI in the Node B according to the third embodiment of the present invention. Referring to FIG. 22, the Node B determines if the buffer status information is supposed to be received in the current scheduling interval in step 2200. If the buffer status information is supposed to be received in the current scheduling interval, the Node B proceeds to step 2202. If the buffer status information is not supposed to be received in the current scheduling interval, the UE proceeds to step 2204. The Node B channel-decodes coded buffer status information received from the UE in step 2202 and CRC-checks the decoded buffer status information in step 2206. Using the CRC check result, the Node B determines if the UE has transmitted the buffer status information in the current scheduling interval in step 2208. If the CRC check is passed, the buffer status information is provided to the EUDCH scheduler and the Node B proceeds to step 2210. If the CRC check is failed, the Node B waits until the next scheduling interval in step 2204 and returns to step 2200.

In step 2210, the Node B channel-decodes coded CSI following the buffer status information and provides the decoded CSI to the EUDCH scheduler. In step 2212, the Node B waits until the next scheduling interval.

In step 2214, the Node B estimates the buffer status of the UE using the last received buffer status information and the amount of received data. The received data amount is known from the E-TFRI and the buffer status is estimated by subtracting the received data amount from the last received buffer status information. In step 2216, the Node B determines if the buffer status estimate is at least equal to $THRES_{buffer}$. If the buffer status estimate is at least equal to $THRES_{buffer}$, the Node B proceeds to step 2218. However, if the buffer status estimate is less than $THRES_{buffer}$, the Node B transmits a Scheduling Release message to the UE in step 2220 and proceeds to step 2222.

Accordingly, as indicated by the dotted lines, step 2220 is optional depending on system implementation. In step 2222, the Node B determines whether or not to continue the EUDCH data service. If the Node B determines to continue the EUDCH data service, it waits until the next scheduling interval in step 2224 and returns to step 2200. However, if the Node B determines not to continue the EUDCH data service, it terminates the procedure.

In step 2218, the Node B determines if the buffer status information is supposed to be received in the current scheduling interval according to Equation (3). If the buffer status information is supposed to be received in the current scheduling interval, the Node B proceeds to step 2226. If the buffer status information is not supposed to be received in the current scheduling interval, the Node B proceeds to step 2230. The Node B receives coded buffer status information in the current scheduling interval, channel-decodes it in step 2226, and checks the CRC of the decoded buffer status information in step 2228. If the CRC check is passed, the buffer status information is provided to the EUDCH scheduler. In step 2230, the Node B determines if the CSI is supposed to be received in the current scheduling interval according to Equation (3). If the CSI is supposed to be received in the current scheduling interval, the Node B receives coded CSI in the current scheduling interval and channel-decodes it in step 2232 and returns to step 2212. If the CSI is not supposed to be received in the current scheduling interval, the Node B returns to step 2212. The decoded CSI is provided to the EUDCH scheduler.

Fourth Embodiment

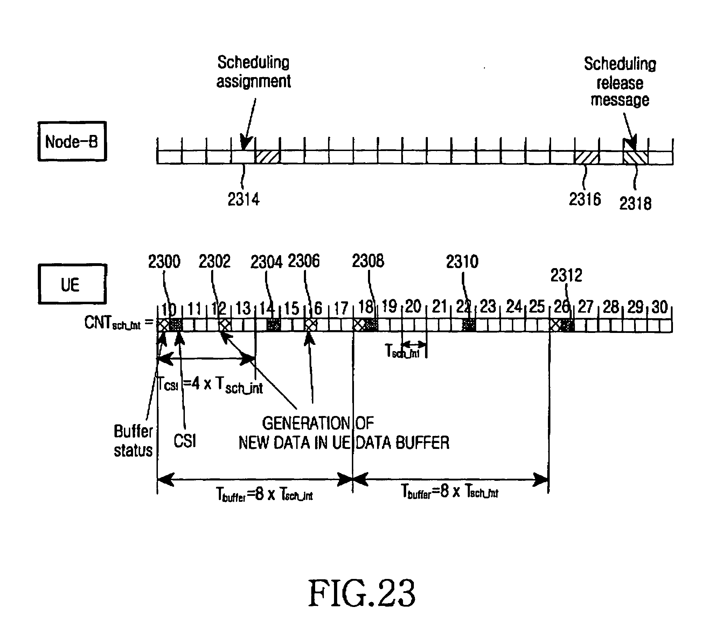

FIG 23 illustrates transmission of buffer status information and CSI according to a fourth embodiment of the present invention. The CSI is transmitted at CSI transmission times determined according to a predetermined CSI transmission interval. The buffer status information is transmitted periodically at its transmission time points and also when new data is generated in the EUDCH data buffer of the UE.

Referring to FIG. 23, in a scheduling interval 2300 with $CNT_{sch\_int}$=10, the UE initially transmits buffer status information and CSI to the Node B, when determining that the amount of packet data stored in the EUDCH data buffer is at least equal to $THRES_{buffer}$. Here, $T_{buffer}$ is eight times $T_{sch\_int}$, and $T_{CSI}$ is four times $T_{sch\_int}$. Therefore, the buffer status information is transmitted in scheduling intervals 2308 and 2312 with $CNT_{sch\_int}$=18 and 26 satisfying $T_{buffer}$. The CSI is transmitted in scheduling intervals 2304, 2308, 2310, and 2312 with $CNT_{sch\_int}$=14, 18, 22, and 26 satisfying $T_{CSI}$, respectively. Also in scheduling intervals 2302 and 2306 with $CNT_{sch\_int}$=12 and 16 in which new data is generated in the EUDCH data buffer after the transmission of the first buffer status information in the scheduling interval 2300, the UE transmits the buffer status information. Therefore, a time delay involved in estimating the UE buffer status in the Node B can be reduced.

The Node B transmits scheduling assignment information in time periods 2314 and 2316 based on the received buffer status information and CSI. In a time period 2318, the Node B transmits a Scheduling Release message to the UE, determining that no data remains in the EUDCH data buffer of the UE.

An EUDCH transmission controller for transmitting the buffer status information and the CSI according to the fourth embodiment of the present invention is configured as illustrated in FIG 14, except that the transmission time decider 1404 controls the CSI switch 1412 to transmit the CSI periodically at predetermined times and controls the buffer status switch 1406 to periodically transmit the buffer status information and upon generation of new packet data.

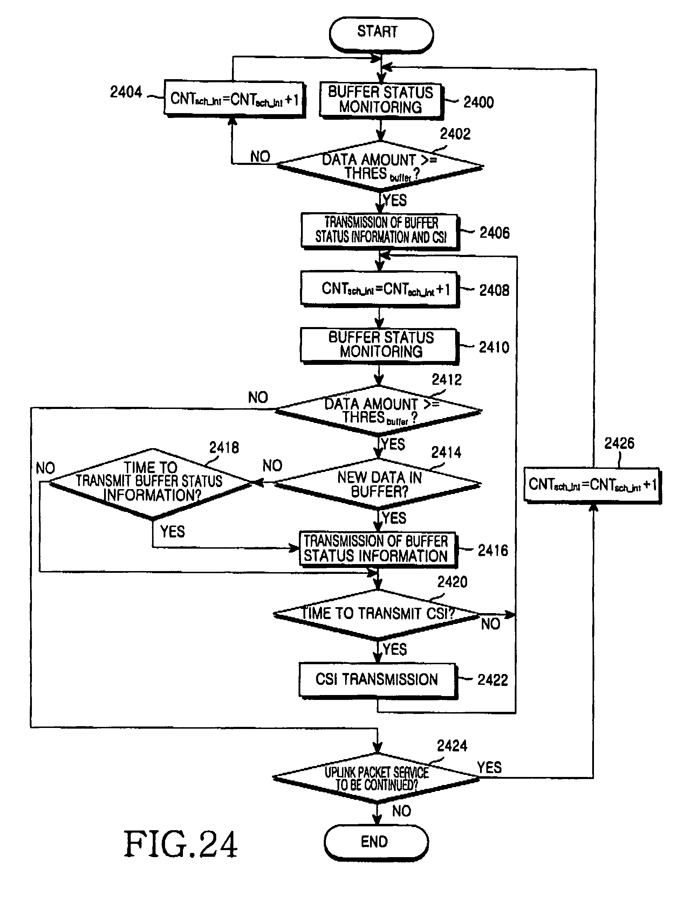

FIG 24 is a flowchart illustrates an operation of the transmitter in the UE according to the fourth embodiment of the present invention. Referring to FIG 24, the UE monitors its buffer status, that is, the amount of data stored in the EUDCH data buffer in step 2400 and determines if the data amount is at least equal to $\text{THRES}_{buffer}$ in step 2402. If the data amount is at least equal to $\text{THRES}_{buffer}$, the UE proceeds to step 2406. If the data amount is less than $\text{THRES}_{buffer}$, the UE proceeds to step 2404. In step 2404, the UE waits until the next scheduling interval, and returns to step 2400 to monitor the EUDCH data buffer.

In step 2406, the UE initially transmits buffer status information and CSI to the Node B, waits until the next scheduling interval in step 2408, and monitors the EUDCH data buffer in step 2410. In step 2412, the UE determines whether or not to continue transmitting the buffer status information and the CSI. The determination is made by comparing the amount of packet data stored in the EUDCH data buffer with $\text{THRES}_{buffer}$. as described above. If the data amount is still at least equal to $\text{THRES}_{buffer}$, the UE proceeds to step 2414 to continue transmitting the buffer status information and the CSI. If the data amount is less than $\text{THRES}_{buffer}$, the UE proceeds to step 2424.

In step 2424, the UE determines whether or not to continue the EUDCH data service. If the UE determines to continue the EUDCH data service, it waits until the next scheduling interval in step 2426 and returns to step 2400. If the UE determines not to continue the EUDCH data service, it terminates the procedure.

In step 2414, the UE determines if new data has been generated in the EUDCH data buffer. Upon generation of new data, the UE proceeds to step 2416; otherwise, it proceeds to step 2418. In step 2418, the Node B determines if the buffer status information is to be transmitted in the current scheduling interval according to $T_{buffer}$ that the RNC notified the UE of. If the buffer status information is to be transmitted in the current scheduling interval, the UE proceeds to step 2416. If the buffer status information is not to be transmitted in the current scheduling interval, the UE proceeds to step 2420. In step 2416, the UE transmits the buffer status information.

In step 2420, the UE determines if the current scheduling interval is a transmission time of the CSI according to $T_{CSI}$ that the RNC notified the UE of. If the CSI is supposed to be transmitted in the current scheduling index, the UE transmits the CSI in step 2422 and returns to step 2408. However, if the CSI is not supposed to be transmitted in the current scheduling interval, the UE returns to step 2408. Although not depicted in FIG. 24, if the UE fails to receive the scheduling assignment information from the Node B within $T_{buffer}$, after transmission of the first buffer status information in step 2406, it simultaneously transmits the buffer status information and the CSI to the Node B.

Fifth Embodiment

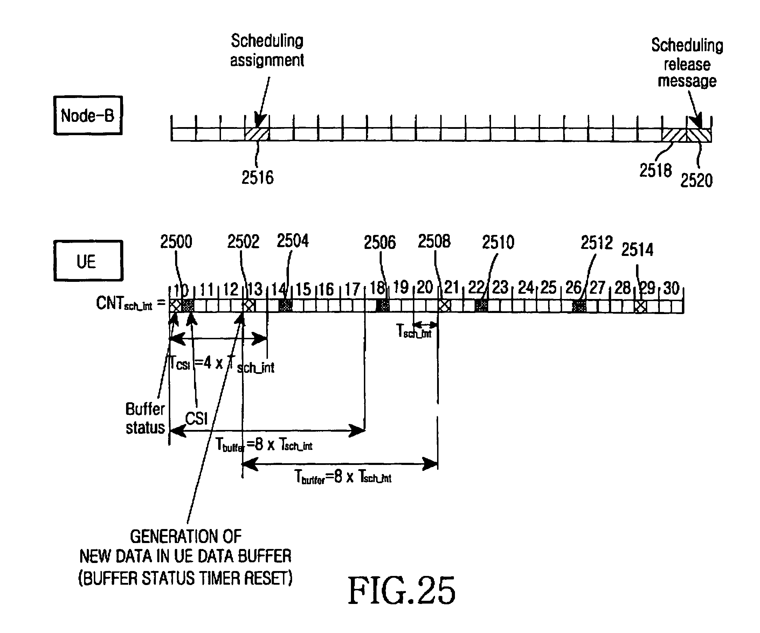

FIG. 25 illustrates transmission of buffer status information using a timer according to a fifth embodiment of the present invention. The use of the timer in determining transmission times for the buffer status information in the UE reduces a time delay in estimating the buffer status of the UE in the Node B and additional uplink interference caused by transmission of the buffer status information. The CSI is periodically transmitted such that CSI transmission times for a plurality of UEs implementing the EUDCH service are distributed. As a result, the increase of uplink interference caused by the CSI transmission is minimized.

Referring to FIG. 25, in a scheduling interval 2500 with $\text{CNT}_{sch\_int}=10$, the UE initially transmits the buffer status information and CSI to the Node B, when determining that the amount of packet data stored in the EUDCH data buffer is at least equal to $\text{THRES}_{buffer}$. At the same time, the UE sets a timer provided for transmission of the buffer status information to $T_{buffer}$ and activates the timer. The value of the timer is decremented by 1 as each scheduling interval passes. When the timer value is 0 or new data is generated, the UE transmits the buffer status information. The CSI is transmitted in scheduling intervals 2504, 2506, 2510, and 2512 with $\text{CNT}_{sch\_int}=14$, 18, 22, and 26, respectively, determined according to $T_{CSI}$.

After the transmission of the first buffer status information in the scheduling interval 2500, upon generation of new data in a scheduling interval 2502 with $\text{CNT}_{sch\_int}=13$, before the next transmission time point 2506 for the buffer status information, the UE transmits the buffer status information, resets the timer to $T_{buffer}$, and activates it. After transmitting the buffer status information in the scheduling interval 2502, the UE transmits the buffer status information in a scheduling interval 2508 with $\text{CNT}_{sch\_int}=21$ corresponding to the next transmission time point set by the timer. Then, the timer is reactivated. If new data is not generated until a scheduling interval 2514 with $\text{CNT}_{sch\_int}=29$ corresponding to the next transmission time with the time value being 0, the UE transmits the buffer status information in the scheduling interval 2514 and sets the timer to 0.

The Node B transmits scheduling assignment information in a time period 2516 based on the buffer status information and CSI received in the scheduling interval 2500 and in a time period 2518 based on the buffer status information and CSI received in the scheduling intervals 2512 and 2514. In a time period 2520, the Node B transmits a Scheduling Release message to the UE, determining that no data remains in the EUDCH data buffer of the UE.

An EUDCH transmission controller for transmitting the buffer status information and the CSI according to the fifth embodiment of the present invention is configured as illustrated in FIG. 14, except that the transmission time decider 1404 controls the CSI switch 1412 to periodically transmit the CSI at predetermined times and controls the buffer status switch 1406 to periodically transmit the buffer status information using a timer set to $T_{buffer}$ or from a timeafter generation of new packet data.

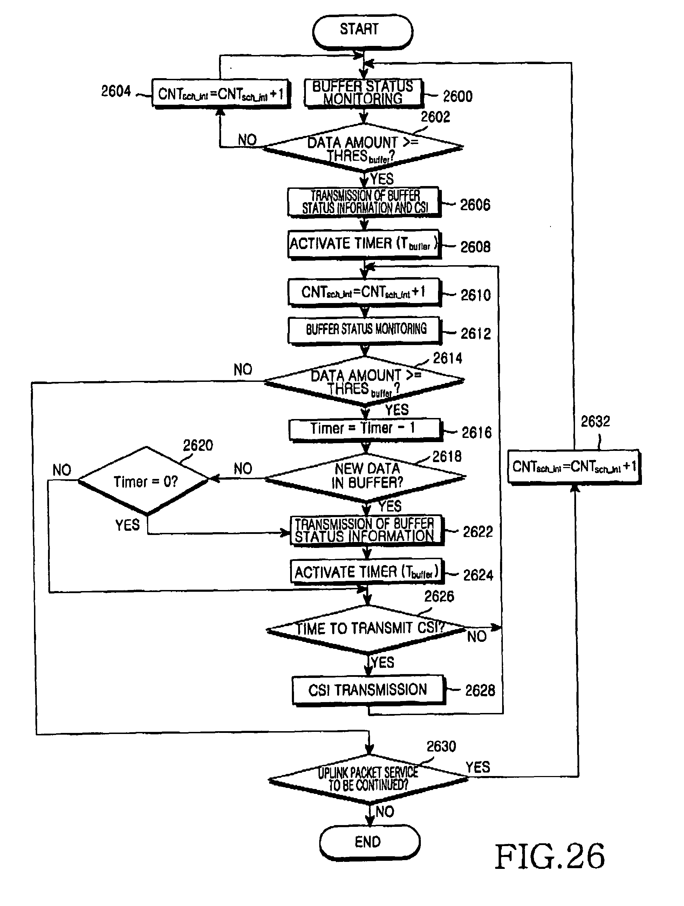

FIG. 26 is a flowchart illustrating an operation of the transmitter in the UE according to the fifth embodiment of the present invention. Referring to FIG 26, the UE monitors its buffer status, that is, the amount of data stored in the EUDCH data buffer in step 2600 and determines if the data amount is at least equal to $THRES_{buffer}$ in step 2602. If the data amount is at least equal to $THRES_{buffer}$, the UE proceeds to step 2606. If the data amount is less than $THRES_{buffer}$, the UE proceeds to step 2604. In step 2604, the UE waits until the next scheduling interval, and returns to step 2600 to monitor the EUDCH data buffer.

In step 2606, the UE initially transmits buffer status information and CSI to the Node B. The UE activates a timer set to $T_{buffer}$ in step 2608, waits until the next scheduling interval in step 2610, and monitors the EUDCH data buffer in step 2612. In step 2614, the UE determines whether or not to continue transmitting the buffer status information and the CSI. As described above, the determination is made by comparing the amount of packet data stored in the EUDCH data buffer with $THRES_{buffer}$ . If the data amount is still at least equal to $THRES_{buffer}$, the UE proceeds to step 2616 to continue transmitting the buffer status information and the CSI. If the data amount is less than $THRES_{buffer}$, the UE proceeds to step 2630.

In step 2630, the UE determines whether or not to continue the EUDCH data service. If the UE determines to continue the EUDCH data service, it waits until the next scheduling interval in step 2632 and returns to step 2600. If the UE determines not to continue the EUDCH data service, it terminates the procedure.

The UE decrements the value of the timer by 1 in step 2616 and determines if new data has been generated in the EUDCH data buffer in step 2618. Upon generation of new data, the UE proceeds to step 2622; otherwise, it proceeds to step 2620. In step 2620, the UE determines if the timer value is 0. Upon time expiration, the UE proceeds to step 2622. If the timer is not expired, the UE proceeds to step 2626.

After transmitting the buffer status information in step 2622, the UE reactivates the timer in step 2624. In step 2626, the Node B determines if the current scheduling interval is a transmission time of the CSI according to $T_{CSI}$ that the RNC notified the UE of. If the CSI is supposed to be transmitted in the current scheduling index, the UE transmits the CSI in step 2628 and returns to step 2610. However, if the CSI is not supposed to be transmitted in the current scheduling interval, the UE returns to step 2610. Although not depicted in FIG 26, if the UE fails to receive the scheduling assignment information from the Node B within $T_{buffer}$, after transmission of the first buffer status information in step 2606, it simultaneously transmits the buffer status information and the CSI to the Node B.

Sixth Embodiment

Periodic CSI transmission, irrespective of the transmission times of buffer status information, is common to the first through fifth embodiments of the present invention. Considering that a fading-caused temporary channel change is overcome to a considerable extent through power control in CDMA systems, Node B controlled scheduling can be performed taking into account long-term fading such as topographical features-incurred shadowing, that is, an average channel change over a long term. In this case, the average channel state over a long term is reflected in the CSI. Thereafter, $T_{CSI}$ can be set to be longer than $T_{buffer}$.

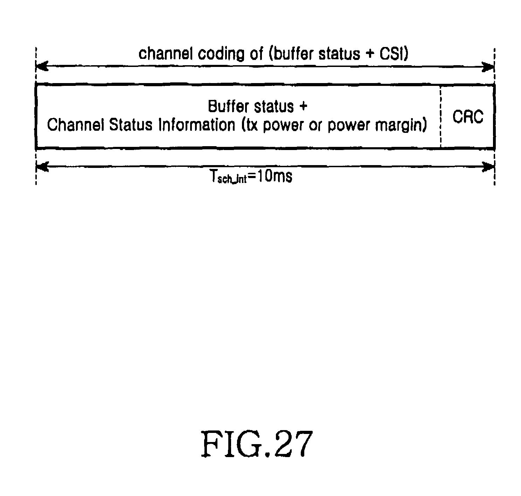

FIG. 27 illustrates a code block having buffer status information and CSI transmitted at a transmission time point of the buffer status information from a UE according to a sixth embodiment of the present invention. Referring to FIG 27, when the CSI represents an average channel status over a relatively long term, it cannot be transmitted periodically. Therefore, the UE transmits both the buffer status information and the CSI at a transmission time. That is, after initially transmitting the buffer status information and the CSI, the UE simultaneously transmits them at transmission times of the buffer status information, which are determined according to $T_{buffer}$, a presence or absence of new data, or $T_{buffer}$ and the presence or absence of new data. Therefore, a CRC attached to the code block is commonly applied to the buffer status information and the CSI.

That is, the UE attaches a common CRC to a data part including the buffer status information and the CSI in a code block and channel-encodes the code block prior to transmission. The Node B detects the common CRC and determines by a CRC check if the buffer status information and the CSI have been received normally.

In accordance with the present invention as described above, after initial transmission of buffer status information and CSI, a UE transmits the buffer status information indicating the status of its EUDCH data buffer to a Node B, upon generation of a new data event in the EUDCH data buffer and/or at transmission time points set for the buffer status information. Therefore, the number of transmissions of the buffer status information from the UE and a time delay in estimating the buffer status of the UE in the Node B are reduced.

While the present invention has been shown and described with reference to certain preferred embodiments thereof, it will be understood by those skilled in the art that various changes in form and details may be made therein without departing from the spirit and scope of the present invention as defined by the appended claims.

**Claims**

1. A method in a user equipment (UE) of transmitting buffer status information and channel status information (CSI) for scheduling an uplink packet data service in a mobile communication system, the buffer status information representing a status of a buffer for storing packet data to be transmitted and the CSI representing an uplink transmit power of the UE, the method comprising the steps of:

   (1) monitoring an amount of packet data stored in the buffer;
   (2) initially transmitting the buffer status information and the CSI, if the amount of packet data stored in the buffer is at least equal to a predetermined threshold; and
   (3) transmitting the buffer status information upon generation of new packet data in the buffer, after initially transmitting the buffer status information and the CSI.

2. The method of claim 1, wherein the buffer status information is attached with a cyclic redundancy code (CRC).

3. The method of claim 1, further comprising the step of periodically transmitting the CSI at predetermined CSI transmission intervals, after initially transmitting the buffer status information and the CSI.

4. The method of claim 1, further comprising the step of transmitting the CSI along with the buffer status information, upon the generation of the new packet data in the buffer.

5. The method of claim 1, wherein the step (2) comprises the step of transmitting the buffer status information and the CSI in predetermined first and second parts, respectively, of a predetermined scheduling interval, and
   wherein the step (3) comprises the step of transmitting the buffer status information in the first part of the scheduling interval.

6. The method of claim 1, further comprising the step of transmitting the buffer status information at predetermined buffer status transmission intervals, after initially transmitting the buffer status information and the CSI.

7. The method of claim 6, further comprising the step of transmitting the buffer status information, if scheduling assignment information for the uplink packet data service is not received within a predetermined buffer status retransmission interval, after transmitting the buffer status information.

8. The method of claim 7, further comprising the step of transmitting the CSI along with the buffer status information, if the scheduling assignment information for the uplink packet data service is not received within the predetermined buffer status retransmission interval after transmitting the buffer status information.

9. The method of claim 1, further comprising the step of discontinuing transmission of the buffer status information and the CSI, if the amount of packet data stored in the buffer is less than the threshold, after the initially transmitting the buffer status information and the CSI.

10. The method of claim 1, further comprising the step of discontinuing transmission of the buffer status information and the CSI, if a scheduling release message requesting termination of transmission of the buffer status information and the CSI is received from the Node B, after initially transmitting the buffer status information and the CSI.

11. A method of receiving, in a Node B, buffer status information and channel status information (CSI) for scheduling an uplink packet data service from a user equipment (UE) in a mobile communication system, the method comprising the steps of:

    (1) receiving data estimated to include the buffer status information and a cyclic redundancy code (CRC) for error detection;
    (2) determining if the received data includes any errors by performing a CRC check using the CRC;
    (3) initially detecting the buffer status information from the received data, if the received data has no errors; and
    (4) initially receiving the CSI,.

12. The method of claim 11, wherein the step (1) comprises the step of receiving the buffer status information in a predetermined first part of a predetermined scheduling interval, and
    wherein the step (4) comprises the step of receiving the CSI in a predetermined second part of the scheduling interval.

13. The method of claim 12, further comprising the step of periodically receiving the CSI in second parts of scheduling intervals, which follow the initial detection of the buffer status information by integer multiples of a predetermined CSI reception interval.

14. The method of claim 12, further comprising the step of receiving the CSI in the second parts of scheduling intervals having the buffer status information.

15. The method of claim 11, further comprising the step of transmitting scheduling assignment information for the uplink packet data service within a predetermined buffer status retransmission interval, after initially receiving the buffer status information.

16. The method of claim 11, further comprising the steps of:

estimating the buffer status of the UE based on the detected buffer status information and an amount of the received data; and
discontinuing reception of the buffer status information, if the buffer status estimate is less than a predetermined threshold.

17. The method of claim 16, further comprising the step of transmitting to the UE a scheduling release message for requesting termination of transmission of the buffer status information and the CSI.

18. An apparatus in a user equipment (UE) for transmitting buffer status information and channel status information (CSI) for scheduling an uplink packet data service in a mobile communication system, the buffer status information representing a status of a buffer for storing packet data to be transmitted and the CSI representing an uplink transmit power of the UE, the apparatus comprising:

a transmission start and end decider for monitoring an amount of packet data stored in the buffer and determining a transmission start and end of the buffer status information and the CSI by comparing the amount packet data stored in the buffer with a predetermined threshold, the transmission start being a time at which the amount packet data stored in the buffer is at least equal to the predetermined threshold;
a transmission time decider for determining if new packet data is stored in the buffer after the transmission start, and determining times for storing the new packet data in the buffer as buffer status transmission times;
a buffer status transmitter for transmitting the buffer status information at the buffer status transmission times; and
a CSI transmitter for transmitting the CSI at the transmission start.

19. The apparatus of claim 18, wherein the buffer status transmitter comprises:

a switch for switching the buffer status information at the buffer status transmission times;
a cyclic redundancy code (CRC) adder for attaching a CRC to the buffer status information, for detecting transmission errors from the buffer status information; and
a channel encoder for channel-encoding the CRC-attached buffer status information.

20. The apparatus of claim 18, wherein the transmission time decider determines CSI transmission times according to a predetermined CSI transmission interval with respect to the transmission start.

21. The apparatus of claim 20, wherein the CSI transmitter periodically transmits the CSI at the determined CSI transmission time points.

22. The apparatus of claim 21, wherein the CSI transmitter comprises:

a switch for switching the CSI at the CSI transmission times; and
a channel encoder for channel-encoding the CSI.

23. The apparatus of claim 18, wherein the CSI transmitter transmits the CSI at the buffer status transmission times.

**24.** The apparatus of claim 23, wherein the CSI transmitter comprises:

a switch for switching the CSI at the buffer transmission time points; and
a channel encoder for channel-encoding the CSI.

**25.** The apparatus of claim 18, wherein the buffer status transmitter and the CSI transmitter transmit the buffer status information and the CSI in predetermined first and second parts, respectively, of a predetermined scheduling interval.

**26.** The apparatus of claim 18, wherein the transmission time decider controls the buffer status transmitter to periodically transmit the buffer status information according to a predetermined buffer status transmission interval with respect to the transmission start, in addition to the buffer status transmission times at which new packet data is stored in the buffer.

**27.** The apparatus of claim 18, wherein the transmission time decider controls the buffer status transmitter to transmit the buffer status information, if scheduling assignment information for the uplink packet data service is not received within a predetermined buffer status retransmission interval after transmission of the buffer status information.

**28.** The apparatus of claim 27, wherein the transmission time decider controls the buffer status transmitter and the CSI transmitter to transmit the buffer status information and the CSI, if scheduling assignment information for the uplink packet data service is not received within the predetermined buffer status retransmission interval after the transmission start.

**29.** The apparatus of claim 18, wherein the transmission start and end decider determines the transmission end at a time at which the amount packet data stored in the buffer is less than the threshold, after the transmission start.

**30.** The apparatus of claim 18, wherein the transmission start and end decider determines the transmission end at a time at which a scheduling release message requesting termination of transmission of the buffer status information and the CSI is received from the Node B, after the transmission start.

**31.** An apparatus for receiving, in a Node B, buffer status information and channel status information (CSI) for scheduling of an uplink packet data service from a user equipment (UE) in a mobile communication system, the apparatus comprising:

a reception time controller for determining CSI reception times with respect to a reception start of the buffer status information and the CSI;
a buffer status receiver for receiving the buffer status information by determining if the buffer status information has been received from the UE and determining a first reception time of the buffer status information as the reception start; and
a CSI receiver for receiving the CSI at the determined CSI reception times.

**32.** The apparatus of claim 31, wherein the buffer status receiver comprises:

a cyclic redundancy code (CRC) checker for receiving data estimated to include the buffer status information and a CRC from the UE, the CRC for detecting transmission errors from the data, checking the CRC, and outputting the received data, if the received data has no errors; and
a channel decoder for detecting the buffer status information by decoding the received data.

**33.** The apparatus of claim 31, wherein the CSI receiver comprises:

a switch for switching received data including the CSI at the CSI reception times; and
a channel decoder for detecting the CSI by decoding the received data.

**34.** The apparatus of claim 31, wherein the buffer status receiver and the CSI receiver receive the buffer status information and the CSI in first and second parts, respectively, of a predetermined scheduling interval.

**35.** The apparatus of claim 34, wherein the CSI receiver periodically receives the CSI in second parts of scheduling intervals, after the reception start, by integer multiples of a predetermined CSI reception interval.

**36.** The apparatus of claim 31, wherein the CSI receiver receives the CSI in second parts of scheduling intervals having the buffer status information.

**37.** The apparatus of claim 31, further comprising a scheduler for transmitting scheduling assignment information for the uplink packet data service within a predetermined buffer status retransmission interval, after receiving the buffer status information and the CSI.

**38.** The apparatus of claim 31, wherein the reception time controller estimates the buffer status of the UE based on the received buffer status information and an amount of the received data, and determines the reception end as a time at which the buffer status estimate is less than a predetermined threshold.

**39.** The apparatus of claim 38, wherein the reception time controller controls a scheduling release message to be transmitted to the UE at the reception end, the scheduling release message requesting termination of transmission of the buffer status information and the CSI.

**40.** A method in a user equipment (UE) of transmitting buffer status information and channel status information (CSI) for scheduling an uplink packet data service in a mobile communication system, the buffer status information representing a status of a buffer for storing packet data to be transmitted and the CSI representing an uplink transmit power of the UE, the method comprising the steps of:

(1) monitoring an amount of packet data stored in the buffer;
(2) initially transmitting the buffer status information and the CSI, if the amount of packet data stored in the buffer is at least equal to a predetermined threshold; and
(3) transmitting the buffer status information according to a predetermined buffer status transmission interval, upon generation of new packet data in the buffer, after initially transmitting the buffer status information and the CSI.

**41.** The method of claim 40, wherein the buffer status information is attached with a cyclic redundancy code (CRC).

**42.** The method of claim 40, further comprising the step of periodically transmitting the CSI at predetermined CSI transmission intervals, after initially transmitting the buffer status information and the CSI.

**43.** The method of claim 40, wherein the step (3) comprises the steps of:

determining if the new packet data has been generated at a buffer status transmission time determined by the buffer status transmission interval, after initially transmitting the buffer status information and the CSI; and
transmitting the buffer status information, if the new packet data has been generated in the buffer.

**44.** The method of claim 43, wherein the step (3) further comprises the step of transmitting the CSI along with the buffer status information, when the new packet data has been generated in the buffer.

**45.** The method of claim 40, wherein the step (2) comprises the step of transmitting the buffer status information and the CSI in predetermined first and second parts, respectively, of a predetermined scheduling interval, and
wherein the step (3) comprises the step of transmitting the buffer status information in the first part of the scheduling interval.

**46.** The method of claim 40, further comprising the step of transmitting the buffer status information, if scheduling assignment information for the uplink packet data service is not received within a predetermined buffer status transmission interval, after transmitting the buffer status information.

**47.** The method of claim 46, wherein the transmission step comprises the step of transmitting the CSI along with the buffer status information, if scheduling assignment information for the uplink packet data service is not received within the predetermined buffer status transmission interval, after initially transmitting the buffer status information.

**48.** The method of claim 40, further comprising the step of discontinuing transmission of the buffer status information and the CSI, if the amount of packet data stored in the buffer is less than the threshold, after initially transmitting the buffer status information and the CSI.

**49.** The method of claim 40, further comprising the step of discontinuing transmission of the buffer status information and the CSI, if a scheduling release message requesting termination of transmission of the buffer status information and the CSI is received from the Node B, after initially transmitting the buffer status information and the CSI.

**50.** A method of receiving, in a Node B, buffer status information and channel status information (CSI) for scheduling an uplink packet data service from a user equipment (UE) in a mobile communication system, comprising the steps of:

(1) receiving data estimated to include the buffer status information and a cyclic redundancy code (CRC) for error detection;
(2) initially detecting the buffer status information from the received data, if the received data has no errors;
(3) receiving the buffer status information at predetermined buffer status reception intervals, after initially detecting the buffer status information; and
(4) initially receiving the CSI.

**51.** The method of claim 50, wherein the step (3) comprises the steps of:

receiving data estimated to include the buffer status information and a CRC for detecting transmission errors in the data, at buffer status reception times determined by the buffer status reception interval with respect to the initial detection of the buffer status information; and
detecting the buffer status information from the received data, if the received data has no errors.

**52.** The method of claim 50, wherein the steps (1) and (3) comprises the step of receiving the buffer status information in a predetermined first part of a predetermined scheduling interval, and
wherein the step (4) comprises the step of receiving the CSI in a predetermined second part of the predetermined scheduling interval.

**53.** The method of claim 52, further comprising the step of periodically receiving the CSI in second parts of scheduling intervals, after initially detecting the buffer status information by integer multiples of a predetermined CSI reception interval.

**54.** The method of claim 52, further comprising the step of receiving the CSI in the second parts of the scheduling intervals having the buffer status information.

**55.** The method of claim 50, further comprising the step of transmitting scheduling assignment information for the uplink packet data service within a predetermined buffer status transmission interval, after receiving the buffer status information.

**56.** The method of claim 50, further comprising the steps of:

estimating the buffer status of the UE based on the detected buffer status information and an amount of the received data; and
discontinuing reception of the buffer status information, if the buffer status estimate is less than a predetermined threshold.

**57.** The method of claim 56, further comprising the step of transmitting to the UE a scheduling release message requesting termination of transmission of the buffer status information and the CSI.

**58.** An apparatus in a user equipment (UE) for transmitting buffer status information and channel status information (CSI) for scheduling an uplink packet data service in a mobile communication system, the buffer status information representing a status of a buffer for storing packet data to be transmitted and the CSI representing an uplink transmit power of the UE, the apparatus comprising:

a transmission start and end decider for monitoring an amount of packet data stored in the buffer and determining the transmission start and end of the buffer status information and the CSI by comparing the amount of packet data stored in the buffer with a predetermined threshold, the transmission start being a time when the amount of packet data stored in the buffer is at least equal to the predetermined threshold;
a transmission time decider for determining if new packet data is stored in the buffer after the transmission start, and determining buffer status transmission times according to a predetermined buffer status transmission interval, upon generation of the new packet data in the buffer;

a buffer status transmitter for transmitting the buffer status information at the buffer status transmission times; and

a CSI transmitter for transmitting the CSI at the transmission start.

59. The apparatus of claim 58, wherein the buffer status transmitter comprises:

a switch for switching the buffer status information at the buffer status transmission times;

a cyclic redundancy code (CRC) adder for attaching a CRC to the buffer status information, for detecting transmission errors in the buffer status information; and

a channel encoder for channel-encoding the CRC-attached buffer status information.

60. The apparatus of claim 58, wherein the transmission time decider determines CSI transmission times according to a predetermined CSI transmission interval with respect to the transmission start.

61. The apparatus of claim 60, wherein the CSI transmitter periodically transmits the CSI at the determined CSI transmission times.

62. The apparatus of claim 61, wherein the CSI transmitter comprises:

a switch for switching the CSI at the CSI transmission times; and

a channel encoder for channel-encoding the CSI.

63. The apparatus of claim 58, wherein the CSI transmitter transmits the CSI at the buffer status transmission times.

64. The apparatus of claim 63, wherein the CSI transmitter comprises:

a switch for switching the CSI at the buffer transmission times; and

a channel encoder for channel-encoding the CSI.

65. The apparatus of claim 58, wherein the transmission time decider determines if the new packet data is generated at the buffer status transmission times, which are determined according to the buffer status transmission interval with respect to the transmission start and, upon generation of the new packet data, controls the buffer status transmitter to transmit the buffer status information.

66. The apparatus of claim 58, wherein the buffer status transmitter and the CSI transmitter transmit the buffer status information and the CSI in predetermined first and second parts, respectively, of a predetermined scheduling interval.

67. The apparatus of claim 58, wherein the transmission time decider controls the buffer status transmitter to transmit the buffer status information, if scheduling assignment information for the uplink packet data service is not received within the buffer status transmission interval, after transmitting the buffet status information.

68. The apparatus of claim 67, wherein the transmission time decider controls the buffer status transmitter and the CSI transmitter to transmit the buffer status information and the CSI, if scheduling assignment information for the uplink packet data service is not received within the buffer status transmission interval after the transmission start.

69. The apparatus of claim 58, wherein the transmission start and end decider determines the transmission end as a time at which the amount of data stored in the buffer is less than the threshold, after the transmission start.

70. The apparatus of claim 58, wherein the transmission start and end decider determines the transmission end as a time at which a scheduling release message requesting termination of transmission of the buffer status information and the CSI is received from the Node B, after the transmission start.

71. An apparatus for receiving, in a Node B, buffer status information and channel status information (CSI) for scheduling an uplink packet data service from a user equipment (UE) in a mobile communication system, the apparatus comprising:

a reception time controller for determining buffer status reception times and CSI reception times with respect to a reception start of the buffer status information and the CSI;

a buffer status receiver for determining if the buffer status information has been initially received from the UE, determining a first reception time of the buffer status information as the reception start, and receiving the buffer status information by determining if the buffer status information has been received at the buffer status reception times; and

a CSI receiver for receiving the CSI at the CSI reception times.

**72.** The apparatus of claim 71, wherein the buffer status receiver comprises:

a switch for continuously switching received data estimated to include the buffer status information and a cyclic redundancy code (CRC) for detecting transmission errors, before the reception start and at the buffer status reception times after the reception start;

a CRC checker for checking the CRC, and outputting the received data, if the received data has no errors; and

a channel decoder for detecting the buffer status information by decoding the received data.

**73.** The apparatus of claim 71, wherein the CSI receiver comprises:

a switch for switching received data including the CSI at the CSI reception times; and

a channel decoder for detecting the CSI by decoding the received data.

**74.** The apparatus of claim 71, wherein the buffer status receiver and the CSI receiver receive the buffer status information and the CSI in first and second parts, respectively, of a predetermined scheduling interval.

**75.** The apparatus of claim 74, wherein the CSI receiver periodically receives the CSI in second parts of scheduling intervals after the reception start by integer multiples of a predetermined CSI reception interval.

**76.** The apparatus of claim 74, wherein the CSI receiver receives the CSI in second parts of scheduling intervals having the buffer status information,

**77.** The apparatus of claim 71, further comprising a scheduler for transmitting scheduling assignment information for the uplink packet data service within a predetermined buffer status transmission interval, after receiving the buffer status information and the CSI.

**78.** The apparatus of claim 71, wherein the reception time controller estimates the buffer status of the UE based on the received buffer status information and an amount of the received data, and determines the reception end as a time at which the buffer status estimate is less than a predetermined threshold.

**79.** The apparatus of claim 78, wherein the reception time controller controls a scheduling release message to be transmitted to the UE at the reception end, the scheduling release message requesting termination of transmission of the buffer status information and the CSI.

**80.** A method in a user equipment (UE) of transmitting buffer status information and channel status information (CSI) for scheduling an uplink packet data service in a mobile communication system, the buffer status information representing a status of a buffer for storing packet data to be transmitted and the CSI representing an uplink transmit power of the UE, the method comprising the steps of:

(1) waiting until a first buffer status transmission time among buffer status transmission times that are determined according to a predetermined buffer status interval;

(2) monitoring an amount of packet data stored in the buffer at the buffer status transmission time;

(3) initially transmitting the buffer status information and the CSI, if the amount of packet data stored in the buffer is at least equal to a predetermined threshold;

(4) determining if new packet data is generated in the buffer at a second buffer status transmission time, after initially transmitting the buffer status information and the CSI; and

(5) transmitting the buffer status information, upon generation of the new packet data in the buffer at the second buffer status transmission time.

**81.** The method of claim 80, wherein the buffer status information is attached with a cyclic redundancy code (CRC).

**82.** The method of claim 80, further comprising the steps of acquiring a CSI transmission interval and periodically transmitting the CSI at CSI transmission intervals, after initially transmitting the buffer status information and the CSI.

**83.** The method of claim 80, wherein the step (5) comprises the step of transmitting the buffer status information and the CSI together, after the initial transmission of the buffer status information and the CSI.

**84.** The method of claim 80, wherein the step of (3) comprises the step of transmitting the buffer status information and the CSI in predetermined first and second parts, respectively, of a predetermined scheduling interval, and
wherein the step of (5) comprises the step of transmitting the buffer status information in the first part of the scheduling interval.

**85.** The method of claim 84, wherein the buffer status transmission times are determined by

$$(CNT_{sch\_int} - offset)mod(T/T_{sch\_int}) = 0$$

where $CNT_{sch\_int}$ is a scheduling interval index indicating a buffer status transmission time, offset is an integer specific to the UE set to be as different as possible for each of a plurality of UEs providing the uplink packet data service, mod is an operator for computing a remainder of a division between two operands, T is a buffer status transmission interval, and $T_{sch\_int}$ is a duration of the scheduling interval.

**86.** The method of claim 80, further comprising the step of transmitting the buffer status information, if scheduling assignment information for the uplink packet data service is not received within the buffer status transmission interval, after transmitting the buffer status information.

**87.** The method of claim 86, further comprising the step of transmitting the CSI along with the buffer status information, if the scheduling assignment information for the uplink packet data service is not received within the buffer status transmission interval, after initially transmitting the buffer status information.

**88.** The method of claim 80, further comprising the step of discontinuing transmission of the buffer status information and the CSI, if the amount of data stored in the buffer is less than the predetermined threshold, after initially transmitting the buffer status information and the CSI.

**89.** The method of claim 80, further comprising the step of discontinuing transmission of the buffer status information and the CSI, if a scheduling release message requesting termination of transmission of the buffer status information and the CSI is received from the Node B, after initially transmitting the buffer status information and the CSI.

**90.** A method of receiving, in a Node B, buffer status information and channel status information (CSI) for scheduling an uplink packet data service from a user equipment (UE) in a mobile communication system, comprising the steps of:

(1) waiting until one of buffer status reception times that are determined by a predetermined buffer status reception interval;
(2) receiving from the UE data estimated to include the buffer status information and a cyclic redundancy code (CRC) for error detection at a first buffer status reception time;
(3) initially detecting the buffer status information from the received data, if the received data has no errors;
(4) periodically receiving the buffer status information at buffer status reception intervals, after initially detecting the buffer status information; and
(5) initially receiving the CSI.

**91.** The method of claim 90, wherein the step (4) comprises the steps of:

receiving data estimated to include the buffer status information and a CRC for error detection at the buffer status reception times; and
detecting the buffer status information from the received data, if the received data has no errors.

**92.** The method of claim 90, wherein each of the steps (2) and (4) comprises the step of receiving the buffer status information in a predetermined first part of a predetermined scheduling interval, and

wherein the step (5) comprises the step of receiving the CSI in a predetermined second part of the predetermined scheduling interval.

**93.** The method of claim 92, wherein the buffer status reception times are determined by

$$(CNT_{sch\_int} - offset)mod(T/T_{sch\_int}) = 0$$

where $CNT_{sch\_int}$ is a scheduling interval index indicating a buffer status reception time, offset is an integer specific to the UE set to be as different as possible for each of a plurality of UEs providing the uplink packet data service, mod is an operator for computing a remainder of a division between two operands, T is a buffer status reception interval, and $T_{sch\_int}$ is a duration of a scheduling interval.

**94.** The method of claim 92, further comprising the step of periodically receiving the CSI in second parts of scheduling intervals after initially detecting the buffer status information by integer multiples of a predetermined CSI reception interval.

**95.** The method of claim 92, further comprising the step of receiving the CSI in second parts of scheduling intervals having the buffer status information.

**96.** The method of claim 90, further comprising the step of transmitting scheduling assignment information for the uplink packet data service within the buffer status reception interval, after receiving the buffer status information.

**97.** The method of claim 90, further comprising the steps of:

estimating the buffer status of the UE based on the detected buffer status information and an amount of the received data; and
discontinuing reception of the buffer status information, if the buffer status estimate is less than a predetermined threshold.

**98.** The method of claim 97, further comprising the step of transmitting to the UE a scheduling release message requesting termination of transmission of the buffer status information and the CSI.

**99.** An apparatus in a user equipment (UE) for transmitting buffer status information and channel status information (CSI) for scheduling an uplink packet data service in a mobile communication system, the buffer status information representing a status of a buffer for storing packet data to be transmitted and the CSI representing an uplink transmit power of the UE, the apparatus comprising:

a transmission start and end decider for monitoring an amount of packet data stored in the buffer at buffer status transmission times determined according to a predetermined buffer status transmission interval and determining the transmission start and end of the buffer status information and the CSI by comparing the amount of packet data stored in the buffer with a predetermined threshold, the transmission start being a time at which the amount of packet data stored in the buffer is at least equal to the predetermined threshold;
a transmission time decider for determining if new packet data is generated in the buffer at the buffer status transmission times;
a buffer status transmitter for transmitting the buffer status information upon generation of the new packet data in the buffer at the buffer status transmission times; and
a CSI transmitter for transmitting the CSI at the transmission start.

**100.** The apparatus of claim 99, wherein the buffer status transmitter comprises:

a switch for switching the buffer status information at the buffer status transmission times;
a cyclic redundancy code (CRC) adder for attaching a CRC to the buffer status information, in order to detect transmission errors from the buffer status information; and
a channel encoder for channel-encoding the CRC-attached buffer status information.

**101.** The apparatus of claim 99, wherein the transmission time decider determines CSI transmission times according to a predetermined CSI transmission interval with respect to the transmission start.

102. The apparatus of claim 101, wherein the CSI transmitter periodically transmits the CSI at the determined CSI transmission times.

103. The apparatus of claim 102, wherein the CSI transmitter comprises:

a switch for switching the CSI at the CSI transmission times; and
a channel encoder for channel-encoding the CSI.

104. The apparatus of claim 99, wherein the CSI transmitter transmits the CSI at the buffer status transmission times.

105. The apparatus of claim 104, wherein the CSI transmitter comprises:

a switch for switching the CSI at the buffer transmission times; and
a channel encoder for channel-encoding the CSI.

106. The apparatus of claim 99, wherein the buffer status transmitter and the CSI transmitter transmit the buffer status information and the CSI in predetermined first and second parts, respectively, of a predetermined scheduling interval.

107. The apparatus of claim 106, wherein the buffer status transmission times are determined by

$$(CNT_{sch\_int}\text{-}offset)mod(T/T_{sch\_int}) = 0$$

where $CNT_{sch\_int}$ is a scheduling interval index indicating a buffer status transmission time, offset is an integer specific to the UE set to be as different as possible for each of a plurality of UEs providing the uplink packet data service, mod is an operator for computing a remainder of a division between two operands, T is a buffer status transmission interval, and $T_{sch\_int}$ is a duration of a scheduling interval.

108. The apparatus of claim 99, wherein the transmission time decider controls the buffer status transmitter to transmit the buffer status information, if scheduling assignment information for the uplink packet data service is not received within the buffer status transmission interval, after transmitting the buffer status information.

109. The apparatus of claim 108, wherein the transmission time decider controls the buffer status transmitter to transmit the CSI along with the buffer status information, if the scheduling assignment information for the uplink packet data service is not received within the buffer status transmission interval, after initially transmitting the buffer status information.

110. The apparatus of claim 99, wherein the transmission start and end decider determines the transmission end as a time at which the amount of data stored in the buffer is less than the predetermined threshold, after the transmission start.

111. The apparatus of claim 99, wherein the transmission start and end decider determines the transmission end as a time at which a scheduling release message requesting termination of transmission of the buffer status information and the CSI is received from the Node B, after the transmission start.

112. An apparatus for receiving, in a Node B, buffer status information and channel status information (CSI) for scheduling an uplink packet data service from a user equipment (UE) in a mobile communication system, the apparatus comprising:

a reception time controller for determining buffer status reception times and CSI reception times with respect to a reception start of the buffer status information and the CSI, the buffer status reception times being determined according to a predetermined buffer status reception interval;
a buffer status receiver for determining a first reception time of the buffer status information as the reception start by determining if the buffer status information has been initially received from the UE, and receiving the buffer status information by determining if the buffer status information has been received from the UE at the buffer status reception times; and
a CSI receiver for receiving the CSI at the determined CSI reception times.

113. The apparatus of claim 112, wherein the buffer status receiver comprises:

a switch for continuously switching received data estimated to include the buffer status information and a cyclic redundancy code (CRC) for detecting transmission errors, before the reception start and at the buffer status reception times, after the reception start;
a CRC checker for checking the CRC, and outputting the received data, if the received data has no errors; and
a channel decoder for detecting the buffer status information by decoding the received data.

114. The apparatus of claim 112, wherein the CSI receiver comprises:

a switch for switching received data including the CSI at the CSI reception times; and
a channel decoder for detecting the CSI by decoding the received data.

115. The apparatus of claim 112, wherein the buffer status receiver and the CSI receiver receive the buffer status information and the CSI in first and second parts, respectively, of a predetermined scheduling interval.

116. The apparatus of claim 115, wherein the buffer status reception times are determined by

$$(CNT_{sch\_int} - offset)mod(T/T_{sch\_int}) = 0$$

where $CNT_{sch\_int}$ is a scheduling interval index indicating a buffer status reception time point, offset is an integer specific to the UE set to be as different as possible for each of a plurality of UEs providing the uplink packet data service, mod is an operator for computing a remainder of a division between two operands, T is a buffer status reception interval, and $T_{sch\_int}$ is a duration of a scheduling interval. .

117. The apparatus of claim 115, wherein the CSI receiver periodically receives the CSI in second parts of scheduling intervals after the reception start by integer multiples of a predetermined CSI reception interval.

118. The apparatus of claim 115, wherein the CSI receiver receives the CSI in second parts of scheduling intervals having the buffer status information.

119. The apparatus of claim 112, further comprising a scheduler for transmitting scheduling assignment information for the uplink packet data service within a predetermined buffer status transmission interval, after receiving the buffer status information and the CSI.

120. The apparatus of claim 112, wherein the reception time controller estimates the buffer status of the UE based on the received buffer status information and an amount of the received data, and determines the reception end as a time at which the buffer status estimate is less than a predetermined threshold.

121. The apparatus of claim 120, wherein the reception time controller controls a scheduling release message to be transmitted to the UE at the reception end, the scheduling release message requesting termination of transmission of the buffer status information and the CSI.

122. A method in a user equipment (UE) of transmitting buffer status information and channel status information (CSI) for scheduling an uplink packet data service in a mobile communication system supporting the uplink packet data service, the buffer status information representing a status of a buffer for storing packet data to be transmitted and the CSI representing an uplink transmit power of the UE, the method comprising the steps of:

(1) monitoring an amount of packet data stored in the buffer,
(2) initially transmitting the buffer status information and the CSI, if the amount of packet data stored in the buffer is at least equal to a predetermined threshold, and activating a timer set to a predetermined buffer status transmission interval;
(3) transmitting the buffer status information and reactivating the timer, upon generation of new packet data in the buffer;

(4) transmitting the buffer status information upon expiration of the timer; and

(5) reactivating the timer.

**123.** The method of claim 122, wherein the buffer status information is attached with a cyclic redundancy code (CRC).

**124.** The method of claim 122, further comprising the step of periodically transmitting the CSI at predetermined CSI transmission intervals, after initially transmitting the buffer status information and the CSI.

**125.** The method of claim 122, further comprising the step of simultaneously transmitting the buffer status information and the CSI, upon one of generation of new packet data and upon expiration of the timer.

**126.** The method of claim 122, wherein the step (2) comprises the step of transmitting the buffer status information and the CSI in predetermined first and second parts, respectively, of a predetermined scheduling interval, and wherein each of the steps (3) and (4) comprises the step of transmitting the buffer status information in the first part of the scheduling interval.

**127.** The method of claim 122, further comprising the step of transmitting the buffer status information, if scheduling assignment information for the uplink packet data service is not received within the buffer status transmission interval, after transmitting the buffer status information.

**128.** The method of claim 127, wherein the transmission step further comprises the step of transmitting the CSI along with the buffer status information, if the scheduling assignment information for the uplink packet data service is not received within the buffer status transmission interval, after initially transmitting the buffer status information.

**129.** The method of claim 122, further comprising the step of discontinuing transmission of the buffer status information and the CSI, if the amount of data stored in the buffer is less than the predetermined threshold, after initially transmitting the buffer status information and the CSI.

**130.** The method of claim 122, further comprising the step of discontinuing transmission of the buffer status information and the CSI, if a scheduling release message requesting termination of transmission of the buffer status information and the CSI is received from the Node B, after initially transmitting the buffer status information and the CSI.

**131.** An apparatus in a user equipment (UE) for transmitting buffer status information and channel status information (CSI) for scheduling an uplink packet data service in a mobile communication system, the buffer status information representing a status of a buffer for storing packet data to be transmitted and the CSI representing an uplink transmit power of the UE, the apparatus comprising:

a transmission start and end decider for monitoring an amount of packet data stored in the buffer, and determining a transmission start and end of the buffer status information and the CSI by comparing the amount of packet data stored in the buffer with a predetermined threshold, the transmission start being a time at which the amount of packet data stored in the buffer is at least equal to the threshold;

a transmission time decider for activating a timer set to a predetermined buffer status transmission interval at the transmission start, reactivating the timer upon expiration of the timer and upon generation of new packet data in the buffer, and determining times of reactivating the timer as buffer status transmission times;

a buffer status transmitter for transmitting the buffer status information at the buffer status transmission times; and

a CSI transmitter for transmitting the CSI at the transmission start.

**132.** The apparatus of claim 131, wherein the buffer status transmitter comprises:

a switch for switching the buffer status information at the buffer status transmission times;

a cyclic redundancy code (CRC) adder for attaching a CRC to the buffer status information, in order to detect transmission errors from the buffer status information; and

a channel encoder for channel-encoding the CRC-attached buffer status information.

**133.** The apparatus of claim 131, wherein the transmission time decider determines CSI transmission times according to a predetermined CSI transmission interval with respect to the transmission start.

**134.** The apparatus of claim 133, wherein the CSI transmitter periodically transmits the CSI at the determined CSI transmission times.

**135.** The apparatus of claim 134, wherein the CSI transmitter comprises:

a switch for switching the CSI at the CSI transmission times; and
a channel encoder for channel-encoding the CSI.

**136.** The apparatus of claim 131, wherein the CSI transmitter transmits the CSI at the buffer status transmission times.

**137.** The apparatus of claim 136, wherein the CSI transmitter comprises:

a switch for switching the CSI at the buffer transmission times; and
a channel encoder for channel-encoding the CSI.

**138.** The apparatus of claim 131, wherein the buffer status transmitter and the CSI transmitter transmit the buffer status information and the CSI in predetermined first and second parts, respectively, of a predetermined scheduling interval.

**139.** The apparatus of claim 131, wherein the transmission time decider controls the buffer status transmitter to transmit the buffer status information, if scheduling assignment information for the uplink packet data service is not received within the buffer status transmission interval, after transmitting the buffer status information.

**140.** The apparatus of claim 139, wherein the transmission time decider controls the buffer status transmitter to transmit the CSI along with the buffer status information, if the scheduling assignment information for the uplink packet data service is not received within the buffer status transmission interval, after initially transmitting the buffer status information.

**141.** The apparatus of claim 131, wherein the transmission start and end decider determines the transmission end as a time at which the amount of data stored in the buffer is less than the predetermined threshold, after the transmission start.

**142.** The apparatus of claim 131, wherein the transmission start and end decider determines the transmission end as a time at which a scheduling release message requesting termination of transmission of the buffer status information and the CSI is received from the Node B, after the transmission start.

FIG.1A

FIG.1B

210

220

200

222

212

224

214

226

216

Node B1

FIG.2

310

EUDCH Setup

312

REPORT OF BUFFER STATUS
REQUESTED DATA RATE, AND CSI

300

314

Rate Indication

302

Node B1

316

UL Packet data transmission

UE

# FIG.3

FIG.4

500

| Scheduling control channel (EU-SCHCCH) | UE ID,scheduling grant/ release message,allowed max data rate | UE ID,scheduling grant/ release message,allowed max data rate | UE ID,scheduling grant/ release message,allowed max data rate | UE ID,scheduling grant/ release message,allowed max data rate |
|---|---|---|---|---|
| | UE#1 | UE#2 | UE#3 | UE#4 |

FIG.5A

EU-SCHCCH → Serial to parallel (510)

Modulation mapper (512)

514 — I ⊗

516 — Q ⊗

$C_{sch\ cont}$ 518 — ⊗

⊕ (520) I+jQ

$S_{sch\_cont}$ ⊗ (522)

Pulse shaping (524)

RF (526)

528

**FIG.5B**

EP 1 509 012 A2

37

FIG.6

EP 1 509 012 A2

| | | |
|---|---|---|
| Buffer status | CRC | Channel Status Information (tx power or power margin) |

Buffer status channel coding      CSI channel coding

$T_{sch\_int}=10ms$

# FIG.7

FIG.8

FIG.9

START

$1004$ — $CNT_{sch\_int}=CNT_{sch\_int}+1$

$1000$ — BUFFER STATUS MONITORING

$1002$

DATA AMOUNT >= THRES $_{buffer}$? — NO

YES

TRANSMISSION OF BUFFER STATUS INFORMATION AND CSI — $1006$

$1008$ — $CNT_{sch\_int}=CNT_{sch\_int}+1$

$1010$ — BUFFER STATUS MONITORING

$1012$

DATA AMOUNT >= THRES $_{buffer}$? — NO

YES

$1014$

NEW DATA IN BUFFER? — NO

$1018$

SCHEDULING ASSIGNMENT INFORMATION RECEIVED WITHIN T $_{buffer}$? — YES / NO

YES

TRANSMISSION OF BUFFER STATUS INFORMATION — $1016$

$1026$

$CNT_{sch\_int}=CNT_{sch\_int}+1$

$1020$

TIME TO TRANSMIT CSI? — NO

YES

CSI TRANSMISSION — $1022$

$1024$

UPLINK PACKET SERVICE TO BE CONTINUED? — YES

NO

END

FIG.10

FIG.11

EP 1 509 012 A2

START

CHANNEL DECODING OF
BUFFER STATUS INFORMATION — 1200

1208

$CNT_{sch\_int}=CNT_{sch\_int}+1$

Buffer status CRC check — 1202

1204
BUFFER STATUS
INFORMATION DETECTED?

NO

YES

CHANNEL DECODING OF CSI — 1206

$CNT_{sch\_int}=CNT_{sch\_int}+1$ — 1210

CHANNEL DECODING OF
BUFFER STATUS INFORMATION — 1212

Buffer status CRC check — 1214

BUFFER STATUS ESTIMATION — 1216

1218
BUFFER
STATUS ESTIMATE
$>=THRES_{buffer}$ ?

NO

YES

1220
TIME TO RECEIVE CSI?

NO

YES

CHANNEL DECODING OF CSI — 1222

1228

$CNT_{sch\_int}=CNT_{sch\_int}+1$

TRANSMISSION OF
SCHEDULING RELEASE MESSAGE — 1224

1226
UPLINK
SERVICE TO BE
CONTINUED?

YES

NO

END

FIG.12

EP 1 509 012 A2

Scheduling
assignment

Scheduling
release
message

Node-B

1314

1316  1318

1300      1302      1306      1308 1310 1312

UE

$CNT_{sch\_int}$ = 10 11 12 13 14 15 16 17 18 19 20 21 22 23 24 25 26 27 28 29 30

$T_{csi} = 4 \times T_{sch\_int}$

$T_{sch\_int}$

Buffer
status

CSI

GENERATION OF NEW DATA
IN UE DATA BUFFER

RETRANSMISSION OF BUFFER
STATUS INFORMATION

$T_{buffer} = 8 \times T_{sch\_int}$

$T_{buffer} = 8 \times T_{sch\_int}$

FIG.13

FIG.14

FIG.15

EP 1 509 012 A2

FIG.16

START

CHANNEL DECODING OF BUFFER STATUS INFORMATION — 1700

1708 — $CNT_{sch\_int} = CNT_{sch\_int} + 1$

Buffer status CRC check — 1702

1704 BUFFER STATUS INFORMATION DETECTED?

NO

YES

CHANNEL DECODING OF CSI — 1706

$CNT_{sch\_int} = CNT_{sch\_int} + 1$ — 1710

BUFFER STATUS ESTIMATION — 1712

1714 BUFFER STATUS ESTIMATE $>= THRES_{buffer}$ ?

NO

YES

1716 TIME TO RECEIVE BUFFER STATUS INFORMATION?

NO

YES

CHANNEL DECODING OF BUFFER STATUS INFORMATION — 1724

Buffer status CRC check — 1726

1728 TIME TO RECEIVE CSI?

NO

YES

CHANNEL DECODING OF CSI — 1730

1722 $CNT_{sch\_int} = CNT_{sch\_int} + 1$

TRANSMISSION OF SCHEDULING RELEASE MESSAGE — 1718

1720 UPLINK PACKET SERVICE TO BE CONTINUED?

YES

NO

END

FIG.17

Scheduling
assignment

Scheduling
release
message

Node-B

1816

1818  1822

1800 1802 1804  1806 1808      1812 1814    1820

UE

$CNT_{sch\_int} =$  10 11 12 13 14 15 16 17 18 19 20 21 22 23 24 25 26 27 28 29 30

GENERATION OF $THRES_{buffer}$ OR
MORE DATA IN UE BUFFER

Buffer
status

CSI

$T_{CSI} = 4 \times T_{sch\_int}$

$T_{sch\_int}$

GENERATION OF
NEW DATA IN
UE DATA BUFFER

RETRANSMISSION OF
BUFFER STATUS
INFORMATION

$T_{buffer} = 6 \times T_{sch\_int}$

NON-RECEPTION OF SCHEDULING
ASSIGNMENT INFORMATION

FIG.18

EP 1 509 012 A2

FIG.19

START

TIME TO
TRANSMIT BUFFER STATUS
INFORMATION? — 2000

NO

YES

$CNT_{sch\_int}=CNT_{sch\_int}+1$ — 2004

BUFFER STATUS MONITORING — 2002

DATA AMOUNT>=
THRES$_{buffer}$? — 2006

NO

YES

TRANSMISSION OF BUFFER
STATUS INFORMATION AND CSI — 2008

$CNT_{sch\_int}=CNT_{sch\_int}+1$ — 2010

BUFFER STATUS MONITORING — 2012

DATA AMOUNT>=
THRES$_{buffer}$? — 2014

NO

YES

TIME TO
TRANSMIT BUFFER STATUS
INFORMATION? — 2016

NO

YES

$CNT_{sch\_int}=CNT_{sch\_int}+1$ — 2020

NEW DATA IN BUFFER? — 2022

NO

YES

BUFFER STATUS
INFORMATION TRANSMITTED
AT PREVIOUS TIME? — 2024

NO

YES

SCHEDULING
ASSIGNMENT INFORMATION
RECEIVED? — 2026

NO

YES

TRANSMISSION OF BUFFER
STATUS INFORMATION — 2028

TIME TO TRANSMIT CSI? — 2030

NO

YES

CSI TRANSMISSION — 2032

UPLINK
PACKET SERVICE TO BE
CONTINUED? — 2018

YES

NO

END

FIG.20

52

FIG.21

START

TIME TO
RECEIVE BUFFER STATUS
INFORMATION? — 2200
YES
NO

2204 — $CNT_{sch\_int} = CNT_{sch\_int} + 1$

CHANNEL DECODING OF
BUFFER STATUS INFORMATION — 2202

Buffer status CRC check — 2206

BUFFER STATUS INFORMATION
DETECTED? — 2208
NO
YES

CHANNEL DECODING OF CSI — 2210

$CNT_{sch\_int} = CNT_{sch\_int} + 1$ — 2212

BUFFER STATUS ESTIMATION — 2214

BUFFER STATUS ESTIMATE >=
THRES$_{buffer}$ ? — 2216
NO
YES — 2218

TRANSMISSION
OF SCHEDULING
RELEASE MESSAGE — 2220

TIME TO RECEIVE BUFFER STATUS
INFORMATION? — 2218
NO
YES

UPLINK
PACKET SERVICE TO
BE CONTINUED? — 2222
YES
NO

END

CHANNEL DECODING OF
BUFFER STATUS INFORMATION — 2226

Buffer status CRC check — 2228

$CNT_{sch\_int} = CNT_{sch\_int} + 1$ — 2224

TIME TO RECEIVE CSI? — 2230
NO
YES

CHANNEL DECODING
OF CSI — 2232

FIG.22

EP 1 509 012 A2

Scheduling
assignment

Scheduling
release
message

Node-B

2314

2316 2318

2300 2302 2304 2306 2308 2310 2312

UE

$CNT_{sch\_int} =$

10 11 12 13 14 15 16 17 18 19 20 21 22 23 24 25 26 27 28 29 30

$T_{sch\_int}$

$T_{csi} = 4 \times T_{sch\_int}$

Buffer
status

CSI

GENERATION OF
NEW DATA IN UE DATA BUFFER

$T_{buffer} = 8 \times T_{sch\_int}$

$T_{buffer} = 8 \times T_{sch\_int}$

FIG.23

START

2404 — $CNT_{sch\_Int}=CNT_{sch\_Int}+1$

BUFFER STATUS
MONITORING — 2400

2402

NO

DATA AMOUNT >=
THRES $_{buffer}$ ?

YES

TRANSMISSION OF BUFFER
STATUS INFORMATION AND CSI — 2406

$CNT_{sch\_Int}=CNT_{sch\_Int}+1$ — 2408

BUFFER STATUS
MONITORING — 2410

2412

NO

DATA AMOUNT >=
THRES $_{buffer}$ ?

YES

2418

NO

TIME TO
TRANSMIT BUFFER STATUS
INFORMATION?

NO

2414

NEW DATA IN
BUFFER?

YES

2426

$CNT_{sch\_Int}=CNT_{sch\_Int}+1$

YES

TRANSMISSION OF BUFFER
STATUS INFORMATION — 2416

2420

TIME TO TRANSMIT CSI?

NO

YES

CSI TRANSMISSION — 2422

2424

UPLINK PACKET SERVICE
TO BE CONTINUED?

YES

NO

FIG.24

END

FIG.25

START

2604 — $CNT_{sch\_int} = CNT_{sch\_int} + 1$    BUFFER STATUS MONITORING — 2600

NO ← DATA AMOUNT >= THRES$_{buffer}$? — 2602

YES

TRANSMISSION OF BUFFER STATUS INFORMATION AND CSI — 2606

ACTIVATE TIMER ($T_{buffer}$) — 2608

$CNT_{sch\_int} = CNT_{sch\_int} + 1$ — 2610

BUFFER STATUS MONITORING — 2612

NO ← DATA AMOUNT >= THRES$_{buffer}$? — 2614

YES

Timer = Timer − 1 — 2616

2632

NO ← Timer = 0? — 2620    NO ← NEW DATA IN BUFFER? — 2618    $CNT_{sch\_int} = CNT_{sch\_int} + 1$

YES                          YES

TRANSMISSION OF BUFFER STATUS INFORMATION — 2622

ACTIVATE TIMER ($T_{buffer}$) — 2624

2626

TIME TO TRANSMIT CSI? — NO

YES

CSI TRANSMISSION — 2628

2630

UPLINK PACKET SERVICE TO BE CONTINUED? — YES

NO

END

FIG.26

channel coding of (buffer status + CSI)

| Buffer status +<br>Channel Status Information (tx power or power margin) | CRC |

$T_{sch\_int}=10ms$

# FIG.27